# EUROPÄISCHE PATENTANMELDUNG

(11) **EP 4 354 095 A1**
(43) Veröffentlichungstag der Anmeldung: **17.04.2024**
(21) Anmeldenummer: 23203585.7
(22) Anmeldetag: 13.10.2023
(51) Int. Cl.: G01F 11/24

(54) **DOSIERVORRICHTUNG**

(30) Priorität: 13.10.2022 DE 102022003855
(71) Anmelder: Holzhäuer, Aaron, 13629 Berlin (DE)
(72) Erfinder: Holzhäuer, Aaron, 13629 Berlin (DE)
(74) Vertreter: Pfleiderer, Bernhard

(57) **Zusammenfassung**

Die vorliegende Erfindung betrifft eine manuelle Dosiervorrichtung (2;28) für ein Vorratsmittel, insbesondere für ein Waschmittel oder Reinigungsmittel, insbesondere in flüssiger Form oder Pulverform, wobei die Dosiervorrichtung umfasst: einen Vorratsbereich (78) in dem sich das Vorratsmittel befindet, einen Ausgabeschacht (40;55;66) für das Vorratsmittel und einen Dosiermechanismus, der zwischen dem Vorratsbereich (78) und dem Ausgabeschacht (40;55;66) angeordnet ist, und wobei der Dosiermechanismus derart ausgestaltet ist, dass er innerhalb eines Bestätigungszyklus eine festgelegte Menge Vorratsmittel in den Ausgabeschacht (40;55;66) entlässt, wobei der Vorratsbereich (78) und der Ausgabeschacht (40;55;66) zu keinem Zeitpunkt des Betätigungszyklus in direkter Kommunikation stehen.

## Beschreibung

Die Erfindung betrifft eine Dosiervorrichtung (oder auch Dosierer), insbesondere für Pulver, insbesondere Spülmittel und Waschmittel, insbesondere solche, die für Geschirrspülmaschinen und Waschmaschinen gedacht sind und ein Verfahren zum Nachfüllen der Pulver, sowie des Dosierens.

### Hintergrund

Maschinengeschirrspülmittel in Pulverform sind allgemein bekannt und vielseitig genutzt. Diese werden in einer großen Verpackung an den Endkunden verkauft. Die Benutzung ist jedoch sehr umständlich. Von den meisten Nutzern wird die große Verpackung in einem Schrank, nahe der Geschirrspülmaschine, gelagert. Möchte man die Spülmaschine mit Geschirrspülmittel befüllen, muss so der Schrank geöffnet werden, der Sack aus dem Schrank zu der Spülmaschine getragen werden. Spätestens wenn man die Packung öffnet, werden die Hände mit Geschirrspülmittel in Kontakt kommen. Um das Pulver nun in das dafür vorgesehene Fach zu befördern, kann ein gewöhnlicher Löffel verwendet werden, den man in der Spülmittelpackung lagern kann. In muss man nun aus dem Pulver herausnehmen und kommt dadurch in noch stärkeren Kontakt. Bei den Versuchen, Pulver mit einem Löffel in das Fach zu manövrieren, gerät für gewöhnlich eine nicht zu missachtende Menge Pulver daneben und verdreckt Küche und Spülmaschine. Nun muss der Löffel zurück in die Packung gepackt werden, die Verpackung verschlossen und zurück in den Schrank gepackt werden. Da nun die Hände verschmutzt sind, wäscht man die Hände. All das kostet viel Zeit und stört den Nutzer. Außerdem verklumpt eine so große, vor Luft ungeschützte Menge Geschirrspülmittel nach kurzer Zeit, da das Pulver leicht Feuchtigkeit von der Luft und anders aufnimmt.

Ein Teil der Probleme des Pulvers wird durch sogenannte Tabs, quaderförmiges zusammengepresstes Pulver, gelöst. Die Benutzung dieser Tabs spart Schritte ein und gestaltet die Benutzung so im Vergleich zu dem Pulver entspannter. Trotzdem muss der Schrank geöffnet und die Tabs müssen aus der Verpackung herausgeholt werden. Dann muss die Kunststoffumhüllung der Tabs entfernt werden und in einen Mülleimer geschmissen werden und der Tab in das Fach gepackt werden. Die Hände standen wieder in direktem Kontakt mit Spülmittel und werden deshalb gewaschen. Auch diese Benutzung stört den Benutzer. Des Weiteren sind die Tabs für die meisten Nutzungsfälle überdosiert. Die volle Menge wird also nicht zwingend benötigt. Dadurch wird die Umwelt unnötig belastet und der Kunde zahlt einen unnötig hohen Preis. Des Weiteren wird die Umwelt durch die aus Kunststoff bestehenden Umhüllungen belastet.

Bekannt sind außerdem Tabs, welche statt einer zu entfernenden Umhüllung über eine Umhüllung verfügen, die sich bei Kontakt mit Wasser auflöst. Vorteil davon ist, dass dem Nutzer weitere Schritte (Öffnung, Gang zum Mülleimer und Händewaschen) erspart bleiben. Die Umhüllung besteht jedoch aus Erdöl und schadet damit schon bei der Herstellung der Umwelt. Die Überdosierung ist hier auch ein Problem. Dadurch wird die Umwelt unnötig belastet und der Kunde zahlt einen unnötig hohen Preis.

Waschmittel für Waschmaschinen zeigen ähnliche Probleme auf. Flüssigwaschmittel ist umweltschädlich und stört zu dosieren.

Des Weiteren gibt es Waschmittel in Pulverform, welches in großen Packungen an den Kunden verkauft wird. Die Lagerung, sowie die Benutzung stören auch hier schnell den Nutzer. Außerdem verklumpt eine so große, vor Luft ungeschützte Menge Waschmittel nach kurzer Zeit, da das Pulver leicht Feuchtigkeit von der Luft und anders aufnimmt.

Bekannt sind außerdem Tabs, welche unter anderem mit Flüssigwaschmittel gefüllt sind und von einer Umhüllung umgeben sind, die sich bei Kontakt mit Wasser auflöst. Die Umhüllung besteht hierbei aus Kunststoff, schadet damit der Umwelt und das Waschmittel ist meist überdosiert. Das heißt, dass oft nicht die volle Menge Waschmittel für den Waschgang benötigt wird. Dadurch wird die Umwelt unnötig belastet und der Kunde zahlt einen unnötig hohen Preis.

### Kurzzusammenfassung

Es ist eine Aufgabe der vorliegenden Erfindung, die Nachteile und Defizite des Standes der Technik zu überwinden.

Die vorliegende Offenbarung stellt eine Dosiervorrichtung (Dosierer) zum flexiblen Dosieren von Pulvern bereit. Die Dosiervorrichtung ist vorteilhaft so ausgestaltet, dass sie mit einer oder zwei Händen geführt werden kann. So kann sie bspw. ohne große Mühen von Hand aus ihrem Ruheort (bspw. Schrank) zum Ort des Dosierens (bspw. Spülmaschine oder Waschmaschine) bewegt werden.

In etwas anderen Worten wird gemäß einem Aspekt eine manuelle, insbesondere handliche, Dosiervorrichtung für ein Vorratsmittel, wie bspw. ein Waschmittel oder Reinigungsmittel, insbesondere in flüssiger Form oder Pulverform, bereitgestellt, wobei die Dosiervorrichtung einen Dosiermechanismus umfasst. Ferner kann die Dosiervorrichtung einen Vorratsbereich, in dem sich zumindest ein Teil des Vorratsmittels befindet, einen Ausgabeschacht für das Vorratsmittel und einen Dosiermechanismus umfassen, wobei der Dosiermechanismus zwischen dem Vorratsbereich und dem Ausgabeschacht angeordnet ist. So kann leicht und genau dosiert werden.

Der Dosiermechanismus ist vorteilhaft derart ausgestaltet, dass er innerhalb eines Bestätigungszyklus eine festgelegte Menge Vorratsmittel in den Ausgabeschacht entlässt, wobei der Vorratsbereich und der Ausgabeschacht zu keinem Zeitpunkt des Betätigungszyklus in direkter Kommunikation stehen. Dies ermöglicht eine genaue Dosierung. Bevorzugt wird das Vorratsmittel aufgrund von Gravitation in den Ausgabeschacht entlassen. Die Dosiervorrichtung benötigt dann keine zusätzliche Energiequelle. Ebenso wird das Vorratsmittel auch vorteilhaft per Gravitation in den Dosiermechanismus eingebracht.

Vorzugsweise sind im Vorratsbereich mindestens ein Schneidelement und ein Öffnungselement vorgesehen, die zum Öffnen einer in den Vorratsbereich einzubringenden Vorratspackung kooperieren. Dadurch können auch geschlossen Vorratspackungen aus bspw. Papier verwendet werden.

Das Schneidelement kann im Wesentlichen (bspw. kreisförmig) umlaufend angeordnet sein, wobei der dabei gebildete Umlauf (bspw. Kreis) von dem Öffnungselement unterbrochen ist. Dadurch kann die Vorratspackung an einer Stelle vom Öffnungselement von einer Umhüllung befreit werden.

Der Dosiermechanismus kann mindestens zwei parallele Kammern aufweisen, die in einer ersten Position mit einem ersten Ende mit dem Vorratsbereich kommunizieren und in einer zweiten Position mit einem zweiten Ende, das dem ersten Ende gegenüberliegt, mit dem Ausgabeschacht kommunizieren, wobei während eines Betätigungszyklus die erste Position, die zweite Position und abschließend wieder die erste Position eingenommen werden. Das hier offenbarte 2- Kammersystem erreicht eine Erhöhung (hier Verdopplung bei etwa gleich großen Kammern) der Ladung bei gleichem Hub (Weg der bei einem Betätigungszyklus von erster zu zweiter Position zurückgelegt werden muss).

Ferner erfolgt in der ersten Position vorteilhaft das Einbringen der Vorratsmittels in die Kammern und in der zweiten Position entlassen die Kammern das Vorratsmittel in den Ausgabeschacht. Beide Male bewegt sich das Vorratsmittel aufgrund von Gravitation.

Der Dosiermechanismus kann vorteilhaft ein Rückstellelement aufweisen, welches der Betätigung von der ersten zur zweiten Position entgegenwirkt. Das Rückstellelement kann bspw. eine oder mehrere Federn umfassen.

Das Rückstellelement kann teilweise in einer der Kammern untergebracht ist. Dadurch kann das Rückstellelement länger sein.

Die äußeren Abmessungen der Dosiervorrichtung können vorteilhaft so gewählt sein, dass diese im Wesentlichen länglich ist, also in zwei Dimensionen (Breite und Höhe) um mehr als etwas 30, 50 oder 70 Prozent kleiner ist, als in einer anderen Dimension (Länge). Der Ausdruck länglich bedeutet im allgemeinsten Sinne L größer als B und L größer als H (d.h. L>H und L>B).

Die Ausgabe des Pulvers kann dabei vorteilhaft bei Drücken eines Knopfes, alternativ aber auch bei anderen Aktionen, erfolgen. Der vorteilhafte Knopf, welcher verwendet werden kann, um das Pulver gegebenenfalls auszugeben, kann vorteilhaft in einer Weise an/in der Dosiervorrichtung platziert sein, dass er während des Haltens der Dosiervorrichtung mit ein oder mehreren Fingern der menschlichen Hand/Hände gut erreicht werden kann, um ihn möglichst angenehm betätigen zu können.

In einer Ausführung können Rückstellvorrichtungen oder -elemente, wie z.B. Druck- oder Zugfedern, oder Federn jeglicher anderen Art vorteilhafterweise dafür sorgen, dass der Knopf in seine Stellung vor dem ersten Betätigen des Knopfes zurückgerät, sodass er erneut betätigt werden kann.

Der Dosiermechanismus kann vorteilhaft so ausgestaltet sein, dass es zu keinem Zeitpunkt des Betätigens des Knopfes eine Stellung zwischen Knopf und dem restlichen Dosiermechanismus gibt, in der der Inhalt des Pulverlagers (Vorratsbereich), vorteilhafterweise Pulver (Vorratsmittel), mehr oder weniger kontinuierlich von dem Pulver Lager zu der Ausgabestelle gerät/befördert wird. Dies ist vorteilhaft, weil so eine gleiche Ausgabemenge bei vollständigem Betätigen des Knopfes (Betätigungszyklus: erste Position, zweite Position, erste Position) garantiert werden kann, sodass sich der Nutzer bei der Einschätzung der ausgegebenen Menge an Inhalt auf die Anzahl der Betätigungen (Betätigungszyklen) des Knopfes berufen/verlassen kann.

Die Menge an Pulver, die während eines solchen Betätigungszyklus ausgegeben wird, kann vorteilhaft kleiner sein, als die für den Anwendungsbereich durchschnittlich benötigte Menge, damit in den Fällen, in denen weniger, als durchschnittlich, Pulver benötigt wird, eine angemessene Menge ausgegeben werden kann. Wenn mehr Pulver benötigt wird, als bei einem Betätigen des Knopfes ausgegeben wird, muss man den Knopf mehrmals betätigen.

Das Pulverlager (Vorratsbereich), der Ort, an dem sich der Großteil des Pulvers befindet, bis es ausgegeben wird, der Dosiervorrichtung kann vorteilhaft oberhalb des Knopfes liegen, damit der Nachschub des Pulvers bei senkrechter Orientierung automatisch (per Gravitation) und ohne zusätzliche Mechanik und/oder Interaktion erfolgt.

Das Pulverlager (Vorratsbereich) kann vorteilhaft hauptsächlich aus einem Deckel und mindestens einem Gehäuseteil bestehen, welche zusammen einen geschlossenen Innenraum formen, auch, um den Inhalt, vorteilhaft Pulver, vor Feuchtigkeit und anderen äußeren Einflüssen zu schützen.

Vorteilhaft kann die Dosiervorrichtung für eine angenehmere und schnellere Benutzung mit einem Wandhalter kombiniert werden.

Dieser kann vorteilhaft an Oberflächen wie bspw. Wände und/oder Schranktüren befestigt werden. Die Dosiervorrichtung könnte dann vorteilhaft temporär an dem Wandhalter befestigt werden.

Vorteilhaft kann die Wandhalterung außerdem so ausgestaltet sein, dass eventuell austretendes Pulver vor dem Austreten bzw. vor dem In-Kontakttreten mit anderen Gegenständen bzw. dem Boden abgehalten wird.

Um dem Nutzer das Nachfüllen der Dosiervorrichtung mit vorteilhaft Pulver zu vereinfachen, kann eine Ausgestaltung über Teile verfügen, die es ermöglichen, Magazine, also vorgefertigte Packungen, vorteilhaft mit Pulver, noch vorteilhafter mit Spülmittel und Waschmittel, insbesondere solche, die für Geschirrspülmaschinen und Waschmaschinen gedacht sind, befüllt, mit möglichst geringem Aufwand für den Nutzer zu nutzen, um das Pulverlager der Dosiervorrichtung zu befüllen.

In einer Ausgestaltung können die Wände bzw. die Teile des Magazins, welche den Inhalt, vorteilhaft Pulver, des Magazins von der äußeren Umgebung trennen aus einem dünnen Material gestaltet sein.

Für dieses dünne Material würde bspw. ein papierartiges Material oder Papier, oder Pappe mit einer Dicke, welche zwischen 0,025mm und 5mm liegt, infrage kommen. In einer Ausgestaltung kann dabei ein spitzes und/oder scharfes Teil (Schneidelement), ein Stachel, innerhalb der Dosiervorrichtung, vorteilhaft oberhalb der Stelle der Dosiervorrichtung, an welcher der auszugebende Inhalt in den Dosiermechanismus gelangt, oder an einer separaten Vorrichtung vorhanden sein, welches das Magazin an mehreren, mindestens jedoch an einer Stelle vollständig, oder teilweise penetriert, sodass der Inhalt, vorteilhaft Pulver austreten kann und das Pulverlager so gefüllt werden kann, ohne dass der Nutzer das Magazin von Hand penetrieren musste.

Vorteilhaft wird der Inhalt des Magazins, vorteilhaft Pulver, in der unmittelbaren Umgebung der Stelle der Penetrierung vor dem Austreten zu ungewünschten Stellen, sowie nicht direkt beteiligte Gegenstände oder bspw. dem Boden abgehalten.

Der Stachel kann vorteilhaft außerdem so angebracht bzw. geformt sein, dass der Inhalt des Magazins, vorteilhaft Pulver, nicht zu sehr von dem Stachel aufgehalten wird, sodass der Inhalt die Möglichkeit hat, die Stelle der Dosiervorrichtung zu erreichen, an welcher der auszugebende Inhalt in den Dosiermechanismus gelangt.

Als vorteilhafte Materialien für den Großteil der Dosiervorrichtung kommen harte Kunststoffe in Betracht. Insbesondere sind Materialien wie Acrylnitril-Butadien-Styrol-Copolymere (kurz ABS) oder Polyactide (kurz PLA) geeignet. Wird ein vorteilhafter Stachel und/oder ein oder mehrere Federelemente verwendet, sind für diese Teile Metalle, wie bspw. Stahl, Edelstahl, Aluminium, Weißblech, vorteilhaft.

Die vorliegende Offenbarung stellt ebenfalls eine Dosiervorrichtung mit der Funktionalität bereit, die es dem Nutzer erleichtert, austauschbare, vorteilhaft mit Pulver gefüllte Magazine, mit geringem Kontakt mit dem Inhalt und geringem Aufwand zu öffnen bzw. die Magazine bzw. die Wände/die Umhüllung der Magazine derart zu penetrieren, dass der Inhalt zu Teilen oder vollständig das Magazin verlassen kann und in das Pulverlager und/oder den Dosiermechanismus übergehen kann.

In einer Ausgestaltung können die Wände bzw. die Teile des Magazins, welche den Inhalt, vorteilhaft Pulver, des Magazins von der äußeren Umgebung trennen aus einem dünnen Material gestaltet sein. Für dieses dünne Material würde bspw. ein papierartiges Material oder Papier, oder Pappe mit einer Dicke, welche zwischen 0,025mm und 5mm liegt, infrage kommen.

Es wird ebenfalls ein Verfahren zur vereinfachten Nachfüllung des Pulverlagers bereitgestellt, wobei das Verfahren folgende Schritte umfasst: (A) Bereitstellen von mindestens einer Dosiervorrichtung mit ungefülltem Pulverlager und ohne Magazin, (B) Lösen und Entfernen des Deckels, welcher zusammen mit mindestens einem Gehäuseteil einen geschlossenen Innenraum formen, (C) Bereitstellen von einem oder mehreren vorteilhaft befüllten Magazinen, (D) Einführen des Magazins in die Öffnung, welche durch das Entfernen des Deckels von dem/den Gehäuseteilen entstanden ist, wodurch das Magazin in mindestens einer Art geöffnet beziehungsweise vollständig oder teilweise penetriert wird, wodurch der Inhalt, vorteilhafterweise Pulver, in das Pulverlager und/oder den Dosiermechanismus übergehen kann, (E) Aufbringung des Deckels, um die Öffnung, welche beim Entfernen des Deckels von dem/den Gehäuseteilen entstanden ist, wieder zu verschließen, damit der Inhalt des Magazins und/oder das Magazin die Dosiervorrichtung nicht verlassen kann, bis es von dem Nutzer gewollt ist.

Alternativ könnte auch von Anfang an mindestens ein Magazin mitgeliefert werden und/oder sich bereits in der Dosiervorrichtung befinden. Alternativ kann das Magazin auch über mehrere, verschiedene Inhalte verfügen, um eine Dosiervorrichtung, welche mehrere Inhalte ausgeben kann, auf einmal nachfüllen zu können. Zu beachten ist außerdem, dass dieser Prozess (B bis E) vorteilhaft wiederholt werden kann, sollte das Magazin leer, bzw. der Inhalt ausgeschöpft sein.

Gemäß einer Ausgestaltung wird eine manuelle Dosiervorrichtung bereitgestellt, die als Aufsatz ausgestaltet ist, der mit einer Vorratspackung koppelbar ist. Hierdurch wird der Vorratsbereich der Dosiervorrichtung, der dann sehr kurz und klein ausfällt erweitert bzw. weitestgehend durch die Vorratspackung gebildet.

Die Dosiervorrichtung kann mindestens eine erste Komponente und eine zweite Komponente umfassen, die relativ zueinander um eine Rotationsachse rotierbar sind.

Die erste Komponente kann eine Kammer, oder bevorzugt eine Mehrzahl von gleichförmigen Kammern aufweisen, die sich von der Rotationsachse weg und entlang der Rotationsachse erstrecken und gleichmäßig umlaufend um die Rotationsachse angeordnet sind.

Die Dosiervorrichtung kann eine Verschlussebene, bspw. eine Verschlussplatte, aufweisen, die ausgestaltet ist, um eine erste Auswahl von Kammern gegenüber dem Vorratsbereich bzw. der Vorratspackung zu verschließen. Insbesondere können in einer Position alle Kammern bis auf eine zweite Auswahl von Kammern zum Vorratsbereich hin verschlossen sein. Die zweite Auswahl kann eine oder vorzugsweise zwei und besonders vorteilhaft vier Kammern umfassen. Die Verschlussebene kann Ausnehmungen aufweisen, durch welche Vorratsmittel vom Vorratsbereich zu dieser zweiten Auswahl von Kammern gelangen kann. Somit können in einer (ersten) Position bspw. immer eine oder vorzugsweise zwei, vorteilhaft vier Kammern mit dem Vorratsbereich kommunizieren, also mit Vorratsmittel befüllt werden. Besonders vorteilhaft können immer zwei Paare von nebeneinanderliegenden Kammern, wobei sich die Paare radial gegenüberliegen, gleichzeitig durch die Ausnehmungen der Verschlussebene befüllt werden.

Die zweite Komponente kann Sperrelemente aufweisen, die ausgestaltet sind, um eine dritte Auswahl von Kammern selektiv gegenüber einem Ausgabeschacht zu verschließen. Bei der zweiten und dritten Auswahl von Kammern kann es sich in einer Position bspw. um je zwei paarweise nebeneinanderliegende Kammern handeln, wobei sich die Paare von Kammern vorteilhaft radial gegenüberliegen. Entsprechend würden dann zwei gleichförmige Sperrelemente radial gegenüberliegend vorgesehen sein, von denen jeweils eines immer zwei nebeneinanderliegende Kammern zum Ausgabeschacht hin verschließt. In einer noch vorteilhafteren Ausgestaltung können die Sperrelemente jeweils drei nebeneinanderliegende Kammern, nämlich eine erste, eine zweite und eine dritte Kammer, vom Ausgabeschacht trennen. In Umlaufrichtung können dann vorteilhaft, die erste und zweite Kammer mit dem Vorratsbereich kommunizieren, also befüllt werden, die dritte Kammer ist sowohl zum Vorratsbereich als auch zum Ausgabeschacht hin verschlossen. Erst wenn eine weitere Betätigung (bspw. eine Drehung um 30°) erfolgt, wird die dritte Kammer zum Ausgabeschacht hin geöffnet. Die zweite Kammer ist dann in beide Richtungen verschlossen, während die erste Kammer noch weiter befüllt werden kann (also mit dem Vorratsbereich weiter kommuniziert). Eine weitere Kammer, die zur ersten Kammer benachbart ist, wird ebenfalls befüllt. Diese Redundanz ist sehr vorteilhaft, um Fehler zu vermeiden bzw. auszugleichen.

Ein Sperrelement kann in Drehrichtung (also in Richtung einer Drehung um die Rotationsachse) länger ausgeführt sein als eine Ausnehmung in der Verschlussebene. Dadurch bleibt die Kammer noch länger gegenüber dem Ausgabeschacht verschlossen. Das ist ebenfalls vorteilhaft bezüglich einer Fehlerintoleranz

In einer Ausgestaltung können eine, zwei, vier, sechs, acht, zehn, besonders vorteilhaft zwölf gleichartige Kammern vorgesehen sein. Diese Kammern können sich alle radial von der Rotationachse weg und entlang der Rotationsachse erstrecken und gleichmäßig umlaufend um die Rotationsachse angeordnet sein. Es können eine, zwei, vier, sechs, acht, zehn, vorteilhaft zwölf gleichartige Kammern vorgesehen sein, die sich zur Verschlussebene und zur Rotationsachse öffnen und selektiv von den Sperrelementen und der Verschlussebene verschlossen und freigegeben werden.

Mindestens eine der Kammern, insbesondere zwei radial gegenüberliegende Kammern, vorteilhaft zwei Paare von benachbarten Kammern, die sich radial gegenüberliegen, können in einer ersten Position mit dem Vorratsbereich kommunizieren und nicht mit einem Ausgabeschacht kommunizieren, in einer zweiten Position weder mit dem Vorratsbereich noch mit dem Ausgabeschacht kommunizieren und in einer dritten Position nur mit dem Ausgabeschacht kommunizieren.

Im Falle von radial gegenüberliegenden Paaren von Kammern, kann in einer zweiten Position vorteilhaft jeweils eine Kammer jedes Paares nicht mit dem Vorratsbereich und nicht mit einem Ausgabeschacht kommunizieren, und in einer dritten Position kann diese jeweils eine Kammer mit dem Ausgabeschacht, nicht aber mit dem Vorratsbereich kommunizieren.

In einer vorteilhaften Ausgestaltung können in einer ersten Position jeweils zwei paarweise nebeneinanderliegende Kammern (also insgesamt 4 Kammern) mit dem Vorratsbereich kommunizieren, d.h. diese vier Kammern werden befüllt. Die Paare von Kammern können vorteilhaft radial gegenüberliegende sein.

Die Dosiervorrichtung kann derart ausgestaltet sein, dass während eines Betätigungszyklus von einer ersten Position zu einer zweiten Position oder von einer zweiten Position zu einer dritten Position oder von einer dritten zu einer ersten Position gewechselt wird., so dass das eine oder mehrere Sperrelemente und die Verschlussebene jeweils je nach Position so angeordnet sind, dass diese die jeweiligen Kammern je nach Position freigeben oder sperren.

Während eines Betätigungszyklus kann die erste Komponente gegenüber der zweiten Komponente jeweils um einen vorgegebenen Winkel, insbesondere um 30°, um die Rotationsachse gedreht werden, so dass ein Wechsel der Position in einer Rotation um den vorgegebenen Winkel besteht.

Die Verschlussebene bzw. Verschlussplatte mit den Ausnehmungen und die Sperrelemente können fest mit der zweiten Komponente verbunden sein, so dass sich die erste Komponente mit den Kammern relativ zur Verschlussebene und den Sperrelementen dreht.

Gemäß einem Aspekt der vorliegenden Offenbarung, kann die Dosiervorrichtung vorteilhafterweise durch eine Vorratspackung aus bspw. Pappe oder Papier mit Vorratsmittel versorgt werden. Gemäß diesem Aspekt kann also der Vorratsbereich von einer eigenständigen Vorratspackung ergänzt und/oder im Wesentlichen gebildet werden. Der Vorratsbereich der Dosiervorrichtung ist dann lediglich sehr klein/kurz ausgestaltet.

Vorteilhafterweise kann die Dosiervorrichtung so gestaltet sein, dass sie nicht ohne passende Vorratspackung benutzbar ist.

Vorteilhafterweise kann die Dosiervorrichtung bzw. die Vorratspackung so gestaltet sein, dass die Vorratspackung nach einmaliger Nutzung (das gesamte Vorratsmittel aus der Vorratspackung ist dosiert) unbenutzbar wird. Dies verhindert ein Nachfüllen des Vorratsmittels durch Wettbewerber.

Ferner erfolgt in der ersten Position vorteilhaft das Einbringen der Vorratsmittels in die Kammern, in der zweiten Position erfolgt kein Einbringen des Vorratsmittels in die jeweiligen Kammern oder ein Entlassen des Vorratsmittels in den Ausgabeschacht und in der dritten Position entlassen die Kammern das Vorratsmittel in den Ausgabeschacht. Beide Male bewegt sich das Vorratsmittel aufgrund von Gravitation.

Der Dosiermechanismus kann vorteilhaft ein Rastelement aufweisen, welches die Betätigung in korrekten Rotationsschritten zwischen den mindestens zwei Komponenten und in Bezug auf die erste, zweite und dritte Position ermöglicht.

Das Rastelement kann bspw. eine oder mehrere Kunststoffteile umfassen. Vorteilhafterweise kann das Rastelement nur eine Rotation in eine Richtung ermöglichen, während die andere Richtung blockiert wird.

Die äußeren Abmessungen der Dosiervorrichtung mit aufgesetzter Vorratspackung können vorteilhaft so gewählt sein, dass diese im Wesentlichen länglich ist, also in zwei Dimensionen (Breite und Höhe) um mehr als etwas 30, 50 oder 70 Prozent kleiner ist als in einer anderen Dimension (Länge). Der Ausdruck länglich bedeutet im allgemeinsten Sinne L größer als B und L größer als H (d.h. L>H und L>B).

Die Ausgabe des Vorratsmittels kann dabei vorteilhaft bei Rotation mindestens eines Teils, alternativ aber auch bei anderen Aktionen, erfolgen.

Der Dosiermechanismus kann vorteilhaft so ausgestaltet sein, dass es zu keinem Zeitpunkt des Betätigens beziehungsweise der Rotation eine Stellung zwischen Kammern und dem restlichen Dosiermechanismus gibt, in der der Inhalt des Pulverlagers (Vorratsbereich), vorteilhafterweise Pulver (Vorratsmittel), mehr oder weniger kontinuierlich von dem Pulver Lager zu der Ausgabestelle gerät/befördert wird.

Dies ist vorteilhaft, weil so eine gleich große Ausgabemenge bei jeder Betätigung (Wechsel von einer Position zu einer nächsten Position), bzw. der Rotation der Kammern, verlassen kann.

Die Menge an Pulver, welche während einer solchen Betätigung ausgegeben wird, kann vorteilhaft kleiner sein als die für den Anwendungsbereich durchschnittlich benötigte Menge, damit in Fällen, in denen weniger als eine durchschnittliche Menge an Pulver benötigt wird, trotzdem eine angemessene Menge ausgegeben werden kann. Sollte man mehr Pulver, als bei einer Betätigung benötigen, wird die Dosiervorrichtung mehrfach betätigt.

Das Pulverlager (Vorratsbereich), also der Ort, an dem sich der Großteil des Pulvers befindet, bis es ausgegeben wird, kann vorteilhaft oberhalb der Kammern liegen, damit der Nachschub des Pulvers bei senkrechter Orientierung automatisch (per Gravitation) und ohne zusätzliche Mechanik und/oder Interaktion erfolgt.

Das Pulverlager (Vorratsbereich) kann vorteilhaft hauptsächlich aus einem entfernbaren Papp- bzw. Papierteil bestehen, welches zusammen mit Teilen der Dosiervorrichtung Innen einen geschlossenen Innenraum formt, auch, um den Inhalt, vorteilhaft Pulver, vor Feuchtigkeit und anderen äußeren Einflüssen zu schützen.

Vorteilhaft kann die Dosiervorrichtung für eine angenehmere und schnellere Benutzung mit einem Wandhalter kombiniert werden. Dieser kann vorteilhaft an Oberflächen wie bspw. Wände und/oder Schranktüren befestigt werden.

Die Dosiervorrichtung könnte dann vorteilhaft temporär an dem Wandhalter befestigt werden. Vorteilhaft kann die Wandhalterung außerdem so ausgestaltet sein, dass eventuell austretendes Pulver vor dem Austreten, bzw. vor dem In-Kontakttreten mit anderen Gegenständen bzw. dem Boden abgehalten wird.

Um dem Nutzer das Nachfüllen der Dosiervorrichtung mit Vorratsmittel (bspw. Pulver) zu vereinfachen, kann diese so ausgestaltet sein, dass es möglich ist, Magazine, also vorgefertigte Packungen, vorteilhaft mit Pulver, noch vorteilhafter mit Spülmittel und Waschmittel, insbesondere solche, die für Geschirrspülmaschinen und Waschmaschinen gedacht sind, mit möglichst geringem Aufwand für den Nutzer zu nutzen, um die Dosiervorrichtung mit Vorratsmittel zu versorgen.

In einer Ausgestaltung können die Wände bzw. die Teile des Magazins bzw. der Vorratspackung, welche den Inhalt, vorteilhaft Pulver, des Magazins von der äußeren Umgebung trennen aus einem dünnen Material gestaltet sein. Für dieses dünne Material würde bspw. ein papierartiges Material oder Papier, oder Pappe mit einer Dicke, welche zwischen 0,025mm und 7mm liegt, infrage kommen.

In einer Ausgestaltung kann dabei die Dosiervorrichtung auf die vorteilhafterweise bereits geöffnete Nachfüllpackung gesteckt werden. Vorteilhafterweise wird die Nachfüllpackung so in der Dosiervorrichtung gehalten, dass die Nachfüllpackung festsitzt, sodass sie sich während normaler Benutzung nicht aus der Dosiervorrichtung löst.

Als vorteilhafte Materialien für den Großteil der Dosiervorrichtung kommen harte Kunststoffe in Betracht. Insbesondere sind Materialien wie Acrylnitril-Butadien-Styrol-Copolymere (kurz ABS) oder Polyactide (kurz PLA) geeignet.

Die vorliegende Offenbarung stellt ebenfalls eine Dosiervorrichtung mit der Funktionalität bereit, die es dem Nutzer erleichtert, austauschbare, vorteilhaft mit Pulver gefüllte Vorratspackungen bzw. Magazine, bei geringem Kontakt mit dem Inhalt und geringem Aufwand zu nutzen, um eine Dosierung des Inhalts zu ermöglichen.

In einer Ausgestaltung können die Wände bzw. die Teile der Vorratspackung bzw. des Magazins, welche den Inhalt, vorteilhaft Pulver, des Magazins von der äußeren Umgebung trennen, aus einem dünnen Material gestaltet sein. Für dieses dünne Material würde bspw. ein papierartiges Material oder Papier, oder Pappe mit einer Dicke, welche zwischen 0,025mm und 7mm liegt, infrage kommen.

Es wird ebenfalls ein Verfahren zur vereinfachten Nachfüllung des Vorratsmittels bereitgestellt, wobei das Verfahren folgende Schritte umfasst:
(A) Bereitstellen von mindestens einer Dosiervorrichtung,
(B) Bereitstellen von einem oder mehreren befüllten Vorratspackungen bzw. Magazinen,
(C) Öffnen mindestens eines Magazins/Vorratspackung, in Form eines Entfernens eines Deckels/Abdeckung der Vorratspackung,
(D) Aufsetzen der Dosiervorrichtung auf die Öffnung der Vorratspackung. Durch die Öffnung kann das Vorratsmittel aus der Vorratspackung/Magazin in die Dosiervorrichtung strömen.

Alternativ könnte auch von Anfang an mindestens ein Magazin mitgeliefert werden und/oder sich bereits an der Dosiervorrichtung befinden.

Alternativ kann das Magazin auch über mehrere, verschiedene Inhalte verfügen, um eine Dosiervorrichtung, welche mehrere Inhalte ausgeben kann, auf einmal nachfüllen zu können. Zu beachten ist außerdem, dass dieser Prozess (B bis D) vorteilhaft wiederholt werden kann, sollte das Magazin leer, bzw. der Inhalt ausgeschöpft sein.

Der Ausgabeschacht der Dosiervorrichtung kann vorteilhaft sehr kurz (bezüglich der Ausgaberichtung des Vorratsmittels) im Verhältnis zur Länge des Dosierers sein. Insbesondere kann der Ausgabeschacht kürzer als 10 mm und vorteilhaft kleiner als 5 mm sein.

### Kurze Beschreibung der Figuren

Weitere Vorteile und Eigenschaften der vorliegenden Offenbarung ergeben sich aus der nachfolgenden Beschreibung und den Zeichnungen, auf die Bezug genommen wird. In den Zeichnungen zeigen:
- Figur 1 eine vereinfachte perspektivische Ansicht einer Dosiervorrichtung gemäß Aspekten der vorliegenden Offenbarung, welche an einer passenden Halterung angebracht ist,
- Figur 2 eine vereinfachte perspektivische Ansicht einer Dosiervorrichtung gemäß Aspekten der vorliegenden Offenbarung, in der man die Dosiervorrichtung gemäß Aspekten der vorliegenden Offenbarung teilweise von unten sieht und in welcher sich der Dosierknopf in betätigtem bzw. gedrücktem Zustand befindet,
- Figur 3 eine vereinfachte perspektivische Ansicht von möglichen Einzelteilen eines Ausführungsbeispiel, welche auseinander bewegt wurden, um diese besser zu erkennen (Explosionszeichnung),
- Figur 4 eine vereinfachte perspektivische Ansicht einer Dosiervorrichtung gemäß Aspekten der vorliegenden Offenbarung, welche an einer passenden Halterung angebracht ist,
- Figur 5 eine vereinfachte perspektivische Ansicht einer Halterung und ihrer Bestandteile, teilweise von vorne, welche für die Dosiervorrichtung gemäß Aspekten der vorliegenden Offenbarung passt,
- Figur 6 eine vereinfachte perspektivische Ansicht einer Halterung und ihrer Bestandteile, teilweise von hinten, welche für die Dosiervorrichtung gemäß Aspekten der vorliegenden Offenbarung passt,
- Figur 7 einen Ausschnitt einer vereinfachten perspektivischen Ansicht eines Teils/Bestandteils/Gehäuseteils einer Dosiervorrichtung gemäß Aspekten der vorliegenden Offenbarung, größtenteils von vorne,
- Figur 8 eine vereinfachte perspektivische Ansicht eines Teils/Bestandteils/Gehäuseteils einer Dosiervorrichtung gemäß Aspekten der vorliegenden Offenbarung, welche in seiner Längsrichtung mittig aufgeschnitten wurde, um bessere Sicht zu bieten,
- Figur 9 eine vereinfachte perspektivische Ansicht eines Deckels, passend für die Dosiervorrichtung gemäß Aspekten der vorliegenden Offenbarung, teilweise von unten,
- Figur 10 einen Ausschnitt einer vereinfachten perspektivischen Ansicht von Teilen möglicher Einzelteile eines Ausführungsbeispiels, welches in deren Längsrichtung mittig aufgeschnitten wurden, dies sind die Hauptbestandteile eines möglichen Dosiermechanismus,
- Figur 11 eine vereinfachte perspektivische Ansicht von möglichen Einzelteilen eines Ausführungsbeispiel einer Dosiervorrichtung, bei dem der Deckel ausgeblendet wurde und die Teile in Längsrichtung mittig aufgeschnitten wurden, um bessere Sicht zu bieten,
- Figur 12 eine vereinfachte perspektivische Ansicht von möglichen Einzelteilen eines Ausführungsbeispiel einer Dosiervorrichtung, bei dem der Deckel ausgeblendet wurde und ein Gehäuseteil in Längsrichtung mittig aufgeschnitten wurden, um bessere Sicht zu bieten, außerdem ist ein vereinfachtes Ausführungsbeispiel eines Magazins gemäß Aspekten der vorliegenden Offenbarung abgebildet,
- Figur 13 einen Ausschnitt einer vereinfachten perspektivischen Ansicht von Teilen möglicher Einzelteile eines Ausführungsbeispiels, welches in deren Längsrichtung mittig aufgeschnitten wurden, dies sind die Hauptbestandteile eines möglichen Dosiermechanismus, wobei der Dosierknopf halb betätigt ist bzw. den halben Weg einer vollständigen Betätigung, welche zu einer Ausgabe führt, zurückgelegt hat,
- Figur 14 einen Ausschnitt einer vereinfachten perspektivischen Ansicht von Teilen möglicher Einzelteile eines Ausführungsbeispiels, welches in deren Längsrichtung mittig aufgeschnitten wurden, dies sind die Hauptbestandteile eines möglichen Dosiermechanismus, wobei der Dosierknopf vollständig betätigt ist bzw. den ganzen Weg einer vollständigen Betätigung, welche zu einer Ausgabe führt, zurückgelegt hat.
- Figur 15 eine vereinfachte Ansicht eines universellen Dosierers 91 gemäß Aspekten der vorliegenden Offenbarung, in der man den universellen Dosierer 91 gemäß Aspekten der vorliegenden Offenbarung teilweise von oben sieht.
- Figur 16 eine vereinfachte Ansicht eines universellen Dosierers 144 gemäß Aspekten der vorliegenden Offenbarung, in der man den universellen Dosierer 144 gemäß Aspekten der vorliegenden Offenbarung teilweise von unten sieht.
- Figur 17 eine vereinfachte Ansicht eines Nachfüllpacks 145 gemäß Aspekten der vorliegenden Offenbarung, in der man im linken Bereich ein geschlossenes Nachfüllpack 145 gemäß Aspekten der vorliegenden Offenbarung erkennt. Im rechten Bereich ein geöffnetes Nachfüllpack 145 gemäß Aspekten der vorliegenden. Dabei sieht man die Figuren teilweise von oben.
- Figur 18 eine vereinfachte Ansicht eines universellen Dosierers 107 und eines Nachfüllpack-Hauptteils 110 im getrennten Zustand gemäß Aspekten der vorliegenden Offenbarung, in der man den universellen Dosierer 107 und das Nachfüllpack-Hauptteil 110 gemäß Aspekten der vorliegenden Offenbarung teilweise von unten sieht.
- Figur 19 eine vereinfachte Ansicht eines universellen Dosierers 111 und eines Nachfüllpack-Hauptteils 112 gemäß Aspekten der vorliegenden Offenbarung, in der man den universellen Dosierer 111 und das Nachfüllpack-Hauptteil 112 gemäß Aspekten der vorliegenden Offenbarung teilweise von unten sieht.
- Figur 20 eine vereinfachte Ansicht eines Hauptgehäuseteils 114 (zweite Komponente) gemäß Aspekten der vorliegenden Offenbarung, in der man das Hauptgehäuseteil (zweite Komponente) 114 gemäß Aspekten der vorliegenden Offenbarung teilweise von unten sieht.
- Figur 21 eine vereinfachte Ansicht eines Hauptgehäuseteils (zweite Komponente) 120 (zweite Komponente) gemäß Aspekten der vorliegenden Offenbarung, in der man das Hauptgehäuseteil (zweite Komponente) 120 gemäß Aspekten der vorliegenden Offenbarung senkrecht von unten sieht.
- Figur 22 eine vereinfachte Ansicht eines Hauptgehäuseteils 122 (erste Komponente) gemäß Aspekten der vorliegenden Offenbarung, in der man das Hauptgehäuseteil 122 gemäß Aspekten der vorliegenden Offenbarung teilweise von oben sieht.
- Figur 23 eine vereinfachte Ansicht eines Hauptgehäuseteils 128 (erste Komponente) gemäß Aspekten der vorliegenden Offenbarung, in der man das Hauptgehäuseteil 128 gemäß Aspekten der vorliegenden Offenbarung senkrecht von oben sieht.
- Figur 24 ein Ausschnitt einer vereinfachten n Ansicht eines Hauptgehäuseteils 120, 128 gemäß Aspekten der vorliegenden Offenbarung, in der man das Hauptgehäuseteil 120, 128 gemäß Aspekten der vorliegenden Offenbarung teilweise von oben sieht. In dieser Ansicht erkennt man das Rastelement 146 in größerer Ansicht.
- Figur 25 eine vereinfachte Ansicht eines Wandhalters 136 gemäß Aspekten der vorliegenden Offenbarung, in der man den Wandhalter 136 gemäß Aspekten der vorliegenden Offenbarung teilweise von unten sieht.
- Figur 26 eine vereinfachte Ansicht eines Wandhalters 141 gemäß Aspekten der vorliegenden Offenbarung, in der man den Wandhalter 141 gemäß Aspekten der vorliegenden Offenbarung teilweise von oben sieht.
- Figur 27 eine vereinfachte Ansicht eines Universellen Dosierers 149 mit eingestecktem Nachfüllpack-Hauptteil 147, gehalten von einem Wandhalter 148 gemäß Aspekten der vorliegenden Offenbarung, in der man den Universellen Dosierers 149 mit eingestecktem Nachfüllpack-Hauptteil 147, gehalten von einem Wandhalter 148 gemäß Aspekten der vorliegenden Offenbarung teilweise von unten sieht.
- Figur 28 eine vereinfachte Ansicht eines Hauptgehäuseteils (erste Komponente) 157 gemäß Aspekten der vorliegenden Offenbarung, in der man das Hauptgehäuseteil (erste Komponente) 157 gemäß Aspekten der vorliegenden Offenbarung teilweise von oben sieht. Das Hauptgehäuseteil (erste Komponente) 157 wurde dabei in Längsrichtung senkrecht mittig aufgeschnitten, um besser Sicht zu bieten.

### Ausführliche Beschreibung von Ausführungsbeispielen

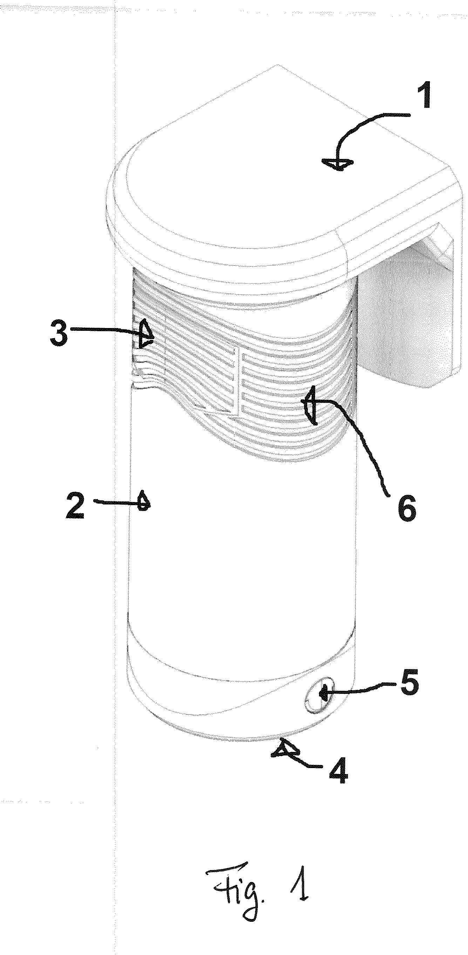

Figur 1 ist eine vereinfachte perspektivische Ansicht einer Dosiervorrichtung 2 gemäß Aspekten der vorliegenden Offenbarung, welche an einer passenden Halterung 1 angebracht ist.

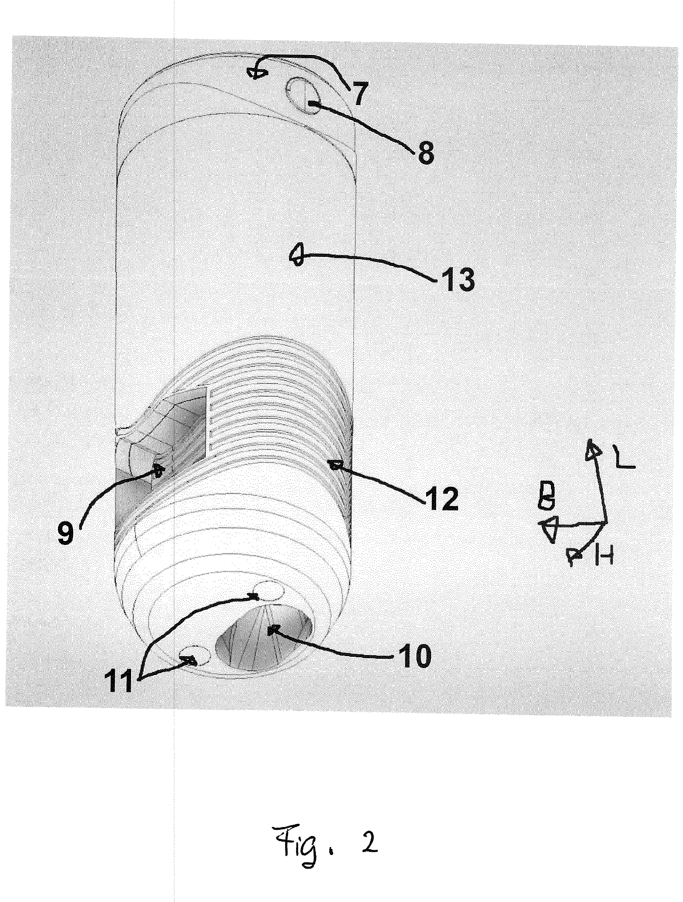

Figur 2 ist eine vereinfachte perspektivische Ansicht einer Dosiervorrichtung gemäß Aspekten der vorliegenden Offenbarung, in der man die Dosiervorrichtung 2 gemäß Aspekten der vorliegenden Offenbarung teilweise von unten sieht und in welcher sich der Dosierknopf 9 in betätigtem bzw. gedrücktem Zustand befindet.

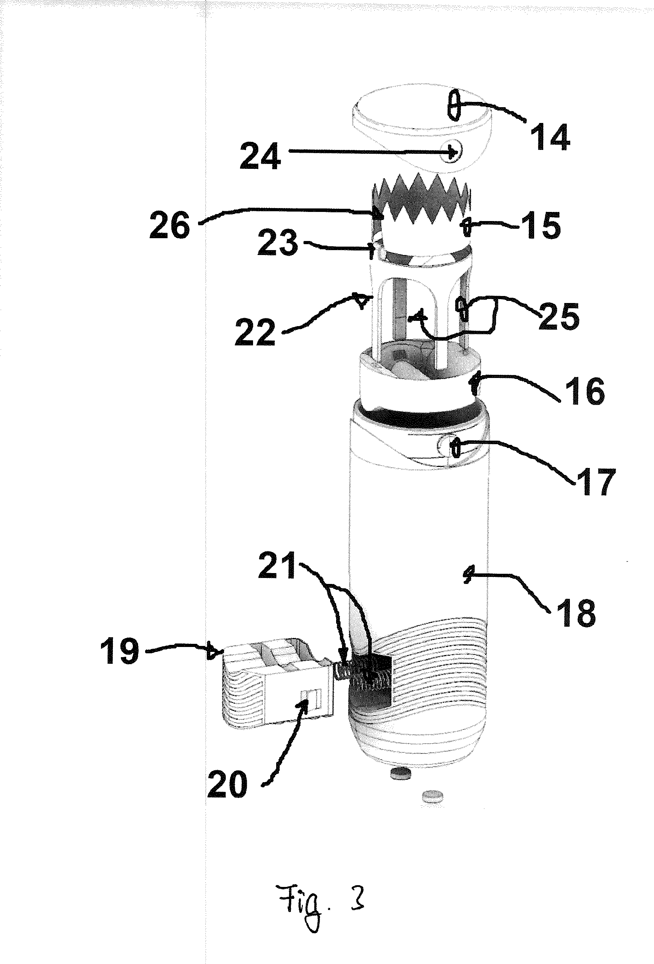

Figur 3 ist eine vereinfachte perspektivische Ansicht von möglichen Einzelteilen eines Ausführungsbeispiel, welche auseinander bewegt wurden, um diese besser zu erkennen (Explosionszeichnung).

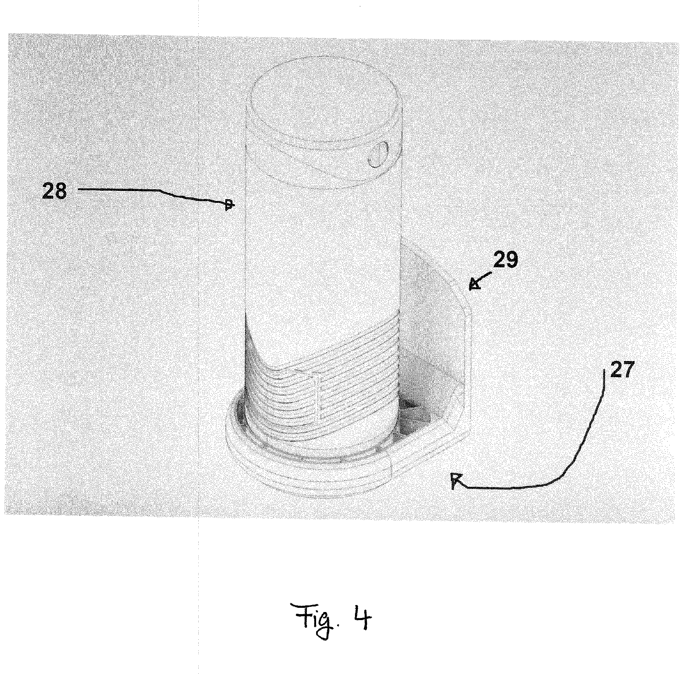

Figur 4 ist eine vereinfachte perspektivische Ansicht einer Dosiervorrichtung 28 gemäß Aspekten der vorliegenden Offenbarung, welche an einer passenden Halterung 27 angebracht ist.

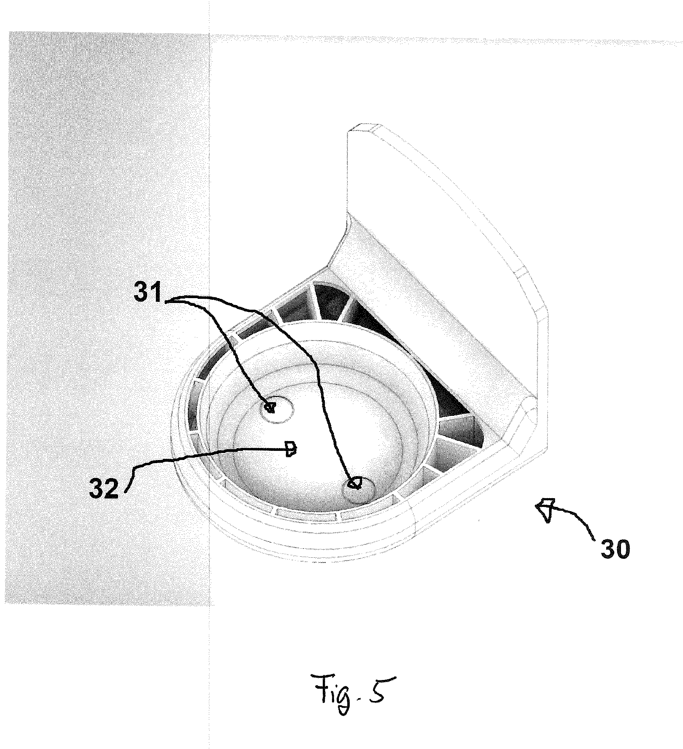

Figur 5 ist eine vereinfachte perspektivische Ansicht einer Halterung 30 und ihrer Bestandteile, teilweise von vorne, welche für die Dosiervorrichtung gemäß Aspekten der vorliegenden Offenbarung passt.

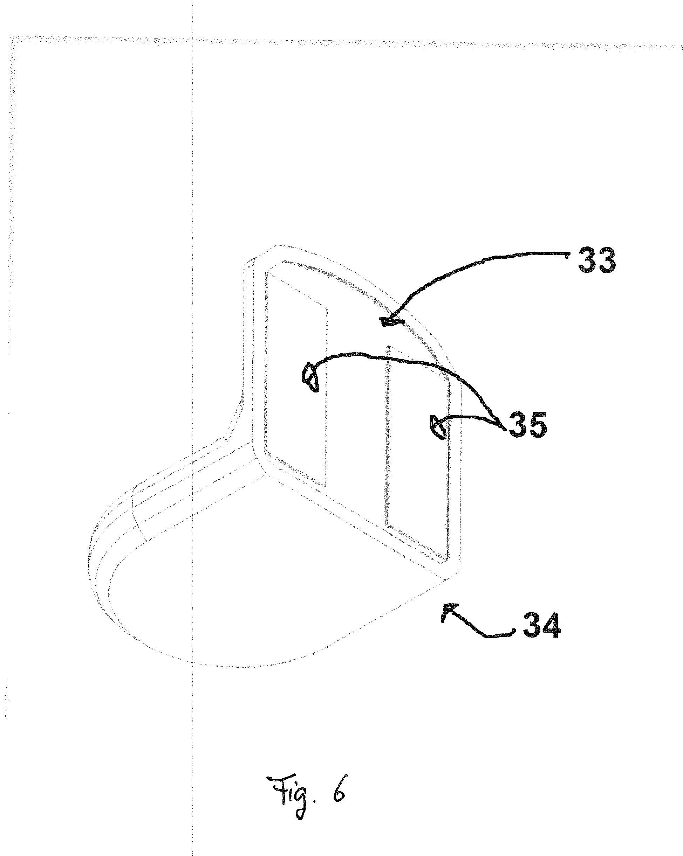

Figur 6 ist eine vereinfachte perspektivische Ansicht einer Halterung 34 und ihrer Bestandteile, teilweise von hinten, welche für die Dosiervorrichtung 2 gemäß Aspekten der vorliegenden Offenbarung passt.

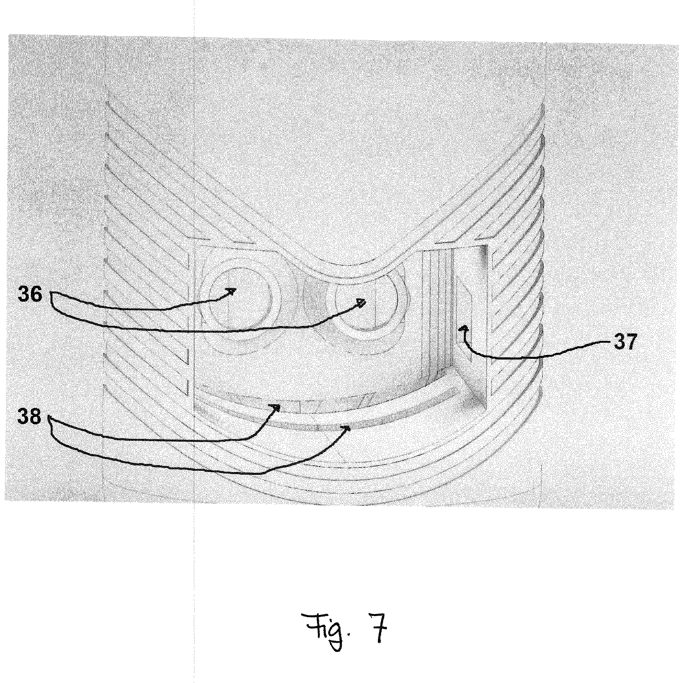

Figur 7 zeigt einen Ausschnitt einer vereinfachten perspektivischen Ansicht eines Teils/Bestandteils/Gehäuseteils einer Dosiervorrichtung 2 gemäß Aspekten der vorliegenden Offenbarung, größtenteils von vorne.

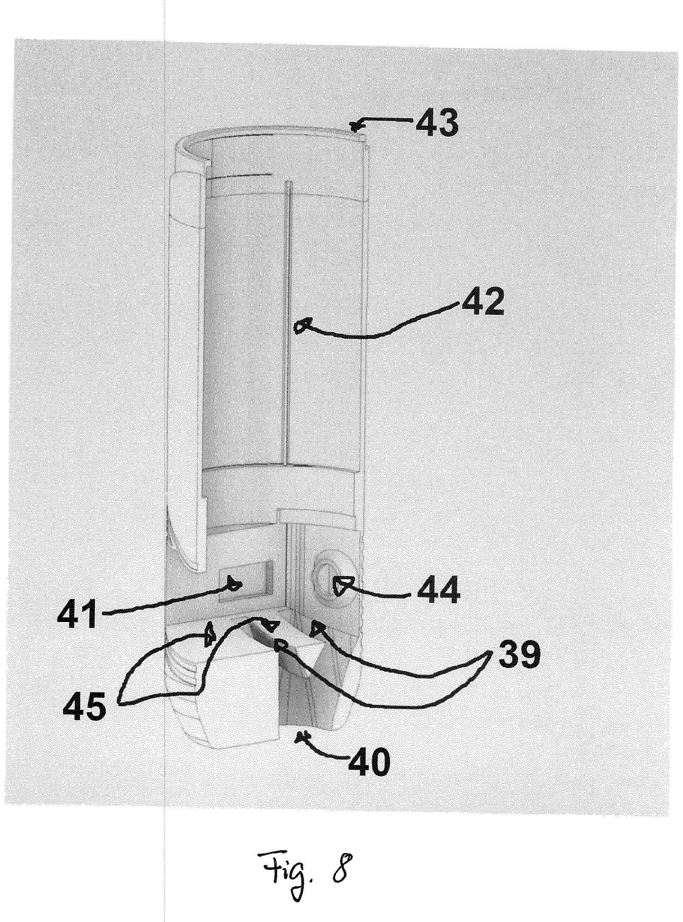

Figur 8 zeigt eine vereinfachte perspektivische Ansicht eines Teils/Bestandteils/Gehäuseteils einer Dosiervorrichtung gemäß Aspekten der vorliegenden Offenbarung, welche in seiner Längsrichtung mittig aufgeschnitten wurde, um bessere Sicht zu bieten.

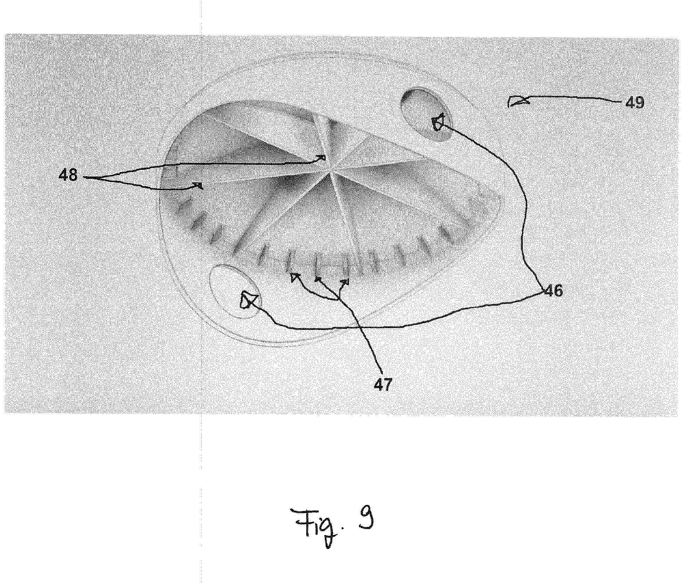

Figur 9 zeigt eine vereinfachte perspektivische Ansicht eines Deckels 49, passend für die Dosiervorrichtung gemäß Aspekten der vorliegenden Offenbarung, teilweise von unten.

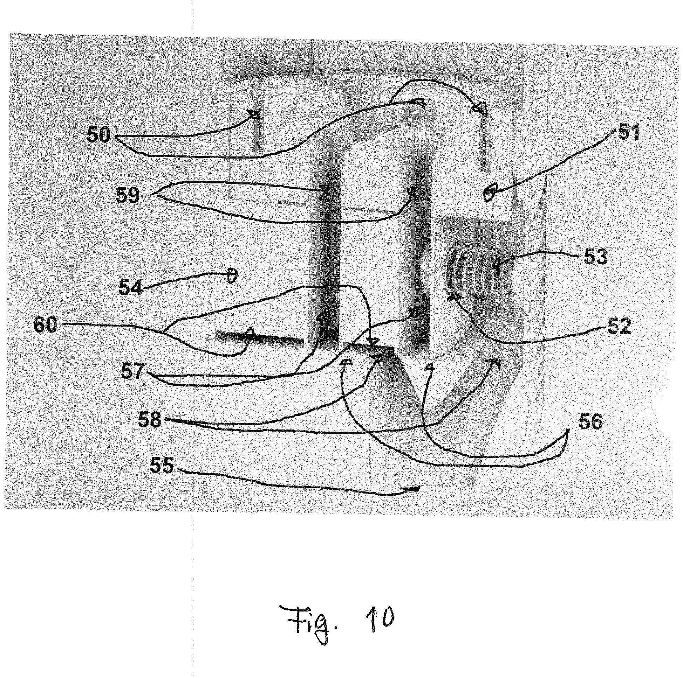

Figur 10 ist einen Ausschnitt einer vereinfachten perspektivischen Ansicht von Teilen möglicher Einzelteile eines Ausführungsbeispiels, welches in deren Längsrichtung mittig aufgeschnitten wurden, dies sind die Hauptbestandteile eines möglichen Dosiermechanismus.

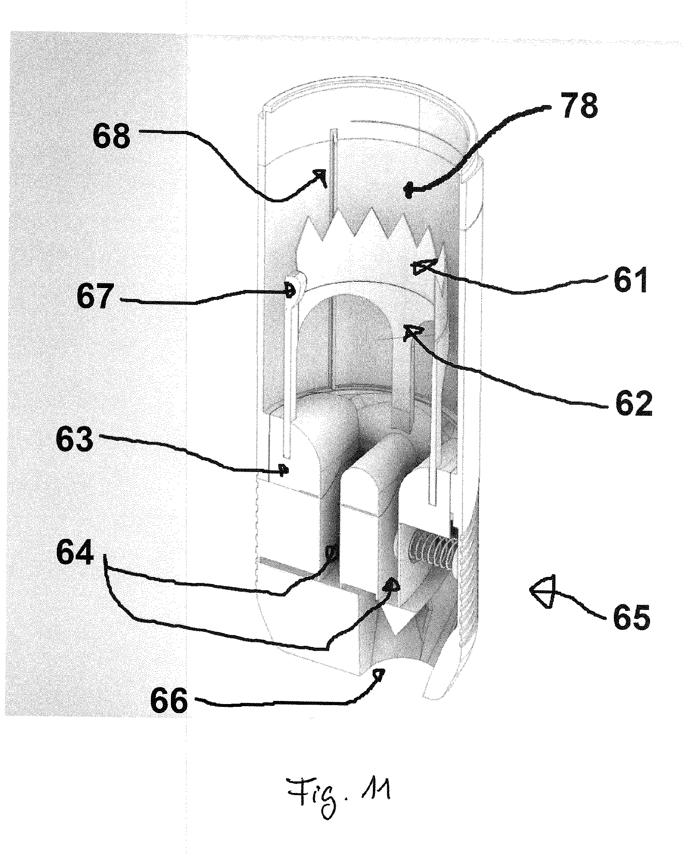

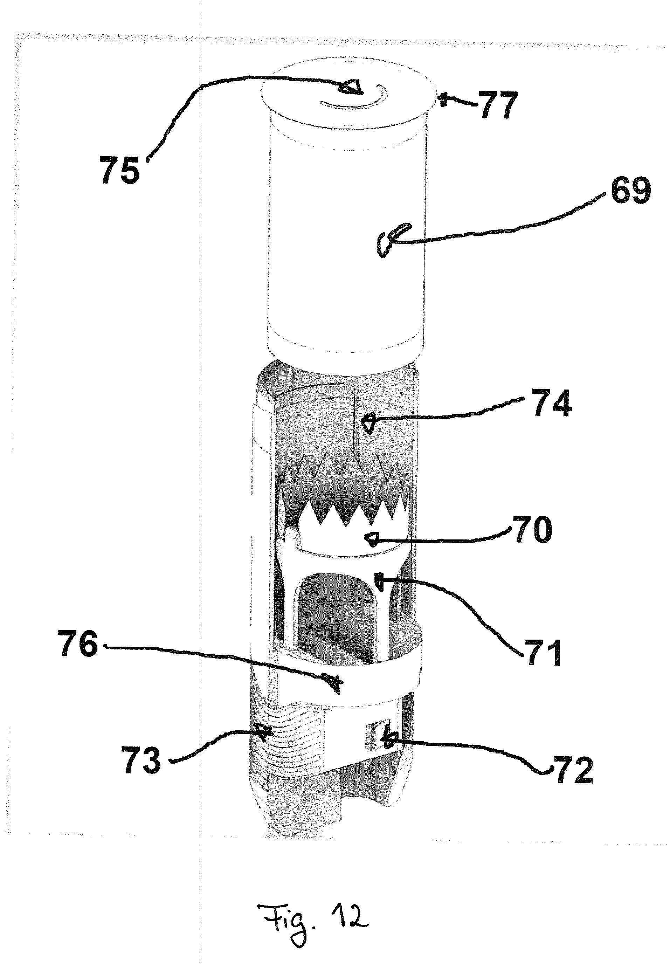

Figur 11 ist eine vereinfachte perspektivische Ansicht von möglichen Einzelteilen eines Ausführungsbeispiel einer Dosiervorrichtung 2, bei dem der Deckel ausgeblendet wurde und die Teile in Längsrichtung mittig aufgeschnitten wurden, um bessere Sicht zu bieten, Figur 12 ist eine vereinfachte perspektivische Ansicht von möglichen Einzelteilen eines Ausführungsbeispiel einer Dosiervorrichtung 2, bei dem der Deckel ausgeblendet wurde und das Hauptgehäuseteil in Längsrichtung mittig aufgeschnitten wurden, um bessere Sicht zu bieten, außerdem ist ein vereinfachtes Ausführungsbeispiel eines Magazins 69 gemäß Aspekten der vorliegenden Offenbarung abgebildet.

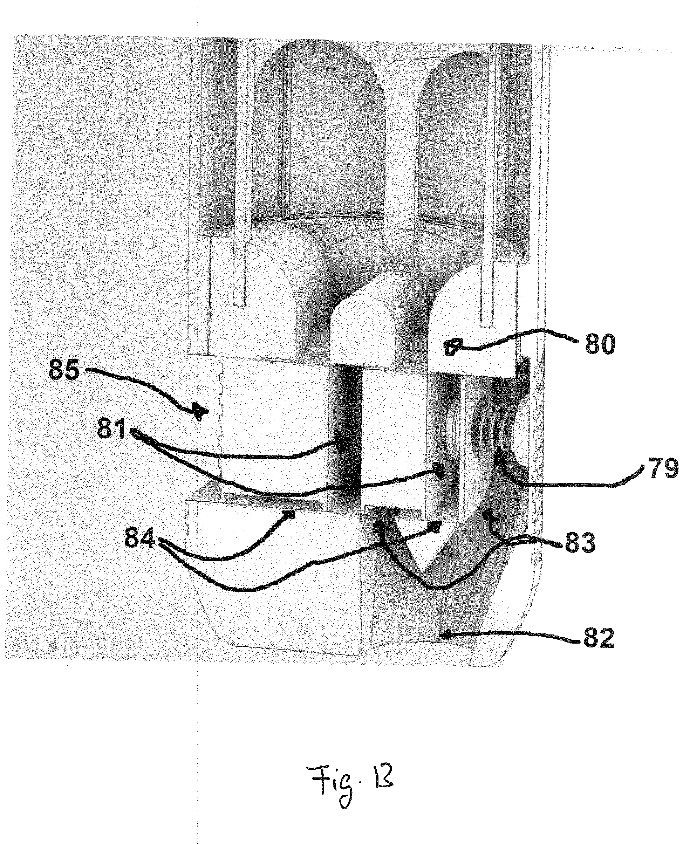

Figur 13 zeigt einen Ausschnitt einer vereinfachten perspektivischen Ansicht von Teilen möglicher Einzelteile eines Ausführungsbeispiels, welches in deren Längsrichtung mittig aufgeschnitten wurden, dies sind die Hauptbestandteile eines möglichen Dosiermechanismus, wobei der Dosierknopf halb betätigt ist bzw. den halben Weg einer vollständigen Betätigung (bzw. die Hälfte eines halben Betätigungszyklus) zwischen erster und zweiter Position, welche zu einer Ausgabe führt, zurückgelegt hat.

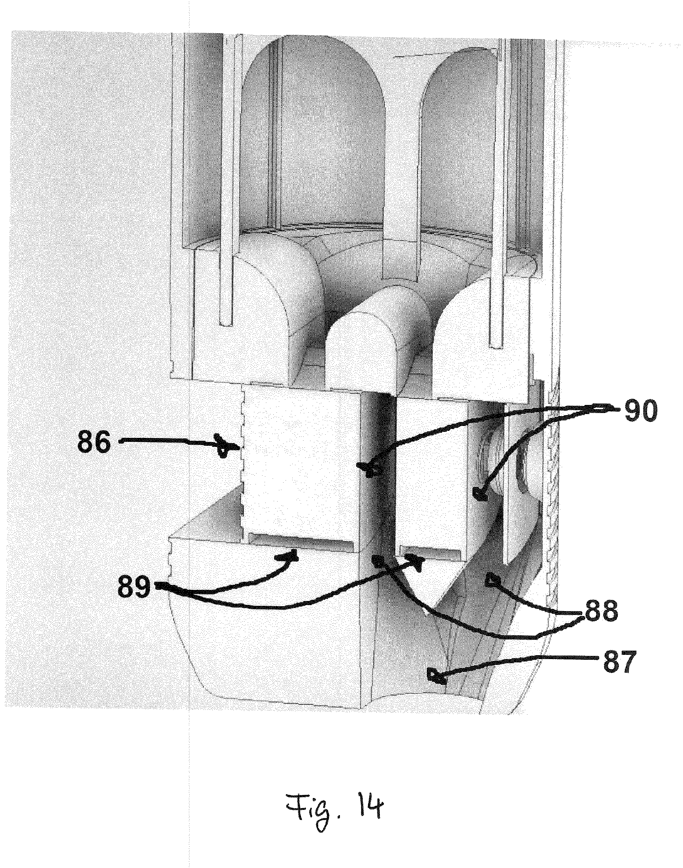

Figur 14 zeigt einen Ausschnitt einer vereinfachten perspektivischen Ansicht von Teilen möglicher Einzelteile eines Ausführungsbeispiels, welches in deren Längsrichtung mittig aufgeschnitten wurden, dies sind die Hauptbestandteile eines möglichen Dosiermechanismus, wobei der Dosierknopf vollständig betätigt ist (also in zweiter Position) bzw. den ganzen Weg einer vollständigen Betätigung, welche zu einer Ausgabe führt, zurückgelegt hat.

Allgemein zeigen die Figuren eine manuelle Dosiervorrichtung 2 (28) für ein Vorratsmittel, insbesondere für ein Waschmittel oder Reinigungsmittel, insbesondere in flüssiger Form oder Pulverform, wobei die Dosiervorrichtung 2 (28) umfasst: einen Vorratsbereich 78 in dem sich das Vorratsmittel befindet, einen Ausgabeschacht 10 (40;55;66;82;87) für das Vorratsmittel und einen Dosiermechanismus, der zwischen dem Vorratsbereich 78 und dem Ausgabeschacht 10 (40;55;66;82;87) angeordnet ist, und wobei der Dosiermechanismus derart ausgestaltet ist, dass er innerhalb eines Bestätigungszyklus eine festgelegte Menge Vorratsmittel in den Ausgabeschacht 10 (40;55;66;82;87) entlässt, wobei der Vorratsbereich 78 und der Ausgabeschacht 10 (40;55;66;82;87) zu keinem Zeitpunkt des Betätigungszyklus in direkter Kommunikation stehen.

Im Vorratsbereich 78 kann mindestens ein Schneidelement 15 (61;70) und ein Öffnungselement 67 (23) vorgesehen sein, die zum Öffnen einer in den Vorratsbereich 78 einzubringenden Vorratspackung (69) kooperieren.

Das Schneidelement 15 (61;70) ist hier im Wesentlichen (kreisförmig) umlaufend angeordnet, wobei der dabei gebildet Umlauf oder Kreis von dem Öffnungselement 67 (23) unterbrochen ist.

Der Dosiermechanismus kann zwei parallele Kammern (57;64;81;90) aufweisen, die in einer ersten Position mit einem ersten Ende mit dem Vorratsbereich 78 kommunizieren und in einer zweiten Position mit einem zweiten Ende, das dem ersten Ende gegenüberliegt, mit dem Ausgabeschacht 40; 55, 66 kommunizieren, wobei während eines Betätigungszyklus die erste Position, die zweite Position und abschließend wieder die erste Position eingenommen werden.

In diesem Ausführungsbeispiel weist der Dosiermechanismus ein Rückstellelement 21 auf, das der Betätigung von der ersten zur zweiten Position entgegenwirkt.

Das Rückstellelement 21 ist teilweise in einer der Kammern (57;64;81;90) untergebracht ist.

Die Figuren zeigen also vereinfachte Darstellungen einer Dosiervorrichtung 2 (28) gemäß Aspekten der vorliegenden Offenbarung, welche an einer passenden Halterung 1 (27;30;34) angebracht ist. Ein Ausführungsbeispiel der Dosiervorrichtung 2 wird durch die Kräfte zwischen den Magneten 11 der Dosiervorrichtung 2 (28) und den Magneten 31 des Ausführungsbeispiels der Halterung 1 (27;30;34) an Ort und Stelle gehalten, bis die Dosiervorrichtung 2 (28) durch eine Kraft, größer als die Anziehungskräfte zwischen den Magneten 11 und 31 gelöst wird. Die Halterung 1 (27;30;34) ist dafür ausgelegt, an mehr oder weniger ebenen Oberfläche, wie bspw. Wänden oder Schrankinnen- oder Schrankaußenseiten, durch die doppelseitigen Klebestreifen 35 der Halterung 1 (27;30;34) befestigt zu werden. Damit die Halterung durch die doppelseitigen Klebestreifen 35 der Halterung 1 (27;30;34) nicht allzusehr von der Oberfläche absteht, an der diese befestigt ist, verfügt die Halterung 1 (27;30;34) über eine Aussparung 33 in der Halterung 1 (27;30;34). In Figur 1 ist unter anderem dargestellt, wie eine Dosiervorrichtung 2 (28) unterhalb der Halterung 1 (27;30;34) angebracht ist, die Dosiervorrichtung 2 (28) und die Halterung 1 (27;30;34) können jedoch vorteilhafterweise auch anders angebracht werden. Dies ist in Figur 4 dargestellt, wobei sich die Dosiervorrichtung 28 (2) oberhalb der Halterung 27 (1 ;30;34) befindet. In der Halterung 1 (27) ist dabei eine Aussparung 32 so angebracht, dass die Dosiervorrichtung 2 (28) mit der Seite, an der vorteilhafterweise die Magnete 11 der Dosiervorrichtung 2 (28) angebracht sind, mehr oder weniger perfekt, dass heißt mehr oder weniger ohne Lücken/Abständen zwischen Dosiervorrichtung 2 (28) und Halterung 1 (27) abschließt. Die Dosiervorrichtung 2 (28) taucht dabei vorteilhaft ca. 15mm in die Halterung 1 (27;30;34) ein. Eine Ausführung der Dosiervorrichtung 2
(28) ist vorteilhaft mehr oder weniger Zylinderförmig, mit einem Durchmesser zwischen 2,5cm und 15cm, unteranderem, damit die Dosiervorrichtung 2 (28) mehr oder weniger gut in eine durchschnittliche menschliche Hand passt. Um den Halt und das Haltegefühl weiter zu verbessern, sind an Hauptgehäuseteil 13 (18;65) und Dosierknopf 3 (19;54;73) vorteilhafte Riffelungen 6 (12) angebracht.

Insbesondere die Figur 12 zeigt eine vereinfachte perspektivische Ansicht von möglichen Einzelteilen eines Ausführungsbeispiel einer Dosiervorrichtung 2 (28), bei dem der Deckel 14 ausgeblendet wurde und das Hauptgehäuseteil 18 in Längsrichtung mittig aufgeschnitten wurden, um bessere Sicht zu bieten. Außerdem ist ein vereinfachtes Ausführungsbeispiel eines Magazins 69 gemäß Aspekten der vorliegenden Offenbarung abgebildet. Um das Pulverlager (78), den mehr oder weniger geschlossenen Innenraum zwischen Trichterelement 16 (63;76;80), Hauptgehäuseteil 13 (18;65) und Deckel 4 (7;14;49) mit Inhalt, in einem Ausführungsbeispiel vorteilhafterweise Pulver, zu befüllen, kann das Pulver von dem Nutzer über die Öffnung, welche beim Lösen und Entfernen des Deckels 4 (7;14;49) vom Hauptgehäuseteil 13 (18;65) entsteht, Pulver manuell eingeschüttet werden. Da dies jedoch umständlich für den Nutzer ist, ist in dem Hauptgehäuseteil 13 (18;65) unter anderem ein Ständer 22 (62;71) für den Stachel 15 (61;70), ein

Stachel 15 (61;70) und viert Positionierungsschienen 42 (68;74) verbaut. Um das Pulverlager (78) mit einem Magazin zu befüllen, wird es über die Öffnung, welche beim Lösen und Entfernen des Deckels 4 (7;14;49) vom Hauptgehäuseteil 13 (18;65) entsteht, in das Hauptgehäuseteil 13 (18;65) von oben eingeführt. Nach vorteilhaft einigen Zentimetern trifft es vorteilhaft auf die vier Positionierungsschienen 42 (68;74), welche das Magazin 69 vorteilhaft mehr oder weniger mittig im Hauptgehäuseteil 13 (18;65) positioniert, bzw. so positioniert, dass das Magazin 69 mehr oder weniger mittig über dem Stachel 15 (61;70) platziert ist, bzw. so platziert ist, dass das Magazin 69 möglichst gut mit den Konturen des Stachels 15 (61;70) übereinstimmt, ohne dabei zu viel Kontaktfläche mit dem Magazin 69 zu haben, damit die Reibung oder andere Störfaktoren minimiert werden. Nach vorteilhaft weiteren Zentimetern Weg trifft die Unterseite des Magazins, welche vorteilhaft aus dünnem, ca. 0,1mm starkem, oder dickerem, oder dünnerem, Papier besteht, auf den Stachel 15 (61;70). Durch seine spitzen Ansätze (im oberen Bereich des Stachels 15 (61;70) und Kraftausübung auf das Magazin durch vorteilhaft die Hand des Nutzers, wird die Unterseite des Magazins 69 mehr oder weniger von dem Stachel 15 (61;70) penetriert, wodurch vorteilhaft ein mehr oder weniger runder Ausschnitt aus der Unterseite des Magazins 69 erfolgt. Der Ausschnitt sollte mehr oder weniger den Konturen des Magazins 69 folgen, welches vorteilhaft rund ausgestaltet sein kann. Wichtig ist, dass kein vollständiger kreisförmiger Ausschnitt erfolgt, sondern eine mehr oder weniger kleine Unterbrechung vorliegt. Diese Unterbrechung ist wichtig, damit sich der sonst vollständige Ausschnitt nicht unkontrolliert in dem Pulverlager (78) oder dem Dosiermechanismus, unteranderem bestehend aus Dosierknopf 3 (19;54;73), Trichterelement 16 (63;76;80), Hauptgehäuseteil 13 (18;65) und Druckfedern 21 (53;79) für den Dosierknopf 3 (19;54;73), befindet, da er da den Dosierprozess bzw. die Ausgabe des Inhalts, vorteilhaft des Pulvers, behindert. Ein weiterer Nachteil davon wäre, dass der vollständige Ausschnitt von dem Nutzer nach dem Entfernen des Magazins 69 eventuell einzeln herausgenommen werden müsste. Durch die Unterbrechung im mehr oder weniger kreisförmigen Ausschnitt bleibt der mehr oder weniger ausgeschnittene Ausschnitt an dem Magazin 69 mehr oder weniger fixiert, wodurch er mehr oder weniger den Bewegungen des Magazins 69 folgt. Damit der Ausschnitt nicht den Dosierprozess stört, tritt die Unterbrechung des Ausschnitts nach einer weiteren Bewegung des Magazins 69 abwärts mit dem Magazinfaltelement 67 (23) in Kontakt. Dieses ist so geformt und an dem Ständer 22 (62;71) für den Stachel 15 (61;70) angebracht, dass der Ausschnitt bei weiterer Abwärtsbewegung des Magazins 69 und bei ausreichend Kraftauswirkung auf das Magazin durch vorteilhaft die Hand des Nutzers, mehr oder weniger nach oben bzw. damit zur Seite, nah an die Wände des Hauptgehäuseteils 13 (18;65) gefaltet wird (da der Ausschnitt des Magazins 69 vorteilhaft sozusagen über das Magazinfaltelement 67 (23) nach unten bzw. in die Richtung zum Trichterelement 16 (63;76;80) gezogen wird und dadurch geklappt/gefaltet wird). Ist das Magazin 69 nun vollständig eingeführt, dass heißt, es schließt oben mit dem Hauptgehäuseteil 13 (18;65) ab und trifft unten mehr oder weniger auf das Trichterelement 16 (63;76;80), ist der Ausschnitt mehr oder weniger vollständig, das heißt um ca. 90grad nach oben bzw. damit zur Seite, nah an die Wände des Hauptgehäuseteils 13 (18;65) gefaltet. Damit wird eventuelles Stören des Ausschnittes beim Dosierprozess verhindert und der Nutzer kann das Magazin 69, als Ganzes, vorteilhaft jedoch ohne Inhalt aus der Dosiervorrichtung 2 (28) entnehmen. Um den Prozess nun abzuschließen, wird der Deckel 4 (7;14;49) nun wieder mit etwas Druck von oben auf das Hauptgehäuseteil 13 (18;65) aufgebracht. Ist das Magazin 69 vollständig eingeführt, liegt unter anderem die Abschlussscheibe 77 des Magazins 69 vollständig auf der Lippe 43 zur Auflage vom Magazin 69 auf. Wird nun der Deckel 4 (7;14;49) aufgebracht, drückt er mit den Auflageelementen 47 und den Versteifungs- und Auflageelementen 48 auf die Lippe 43 zur Auflage vom Magazin 69, wodurch diese fixiert wird und ein Spalt zwischen Magazin 69 und/oder Lippe 43 zur Auflage vom Magazin 69 mehr oder weniger nicht mehr vorhanden ist. Dies ist wichtig, da der Inhalt des Magazins 69 und des Pulverlagers (78) während normaler Benutzung nicht zwischen Magazin 69 und Deckel 4 (7;14;49) gelangen soll, damit es bspw. beim Lösen und Entfernen des Deckels 4 (7;14;49) vom Hauptgehäuseteil 13 (18;65) nicht stört. Sobald der Inhalt des Magazins mehr oder weniger aufgebraucht ist, sollte das Magazin 69 bzw. der Inhalt ausgetauscht werden, bzw. das Pulverlager (78) nachgefüllt werden, damit die weitere Dosierfunktion garantiert werden kann. Dafür geht man genauso vor, wie beim ersten Einführen des Magazins, jedoch muss nun als Schritt nach dem Lösen und Entfernen des Deckels 4 (7;14;49) vom Hauptgehäuseteil 13 (18;65) zuerst das Magazin 69 herausgenommen werden. Dafür kann das klappbare Halterungsteil 75 am Magazin 69 hochgeklappt werden (vorteilhafterweise ca. 90grad), damit man besseren Halt am Magazin 69 hat. Nun wird es geradlinig nach oben aus dem Hauptgehäuseteil 13 (18;65) bewegt und vorteilhaft entsorgt. Sobald der Ausschnitt mehr oder weniger vollständig ist, strömt der Inhalt des Magazins, vorteilhaft Pulver, in das Pulverlager (78) und damit auf das Trichterelement 16 (63;76;80). Damit der Ständer 22 (62;71) für den Stachel 15 (61;70) den Fluss des Inhalts möglichst wenig stört, sind Aussparungen 25 am Ständer 22 (62;71) für den Stachel 15 (61;70) angebracht, durch welche der Inhalt mehr oder weniger ungestört in Richtung des Trichterelement 16 (63;76;80) fließen/sich bewegen kann. Das Trichterelement 16 (63;76;80) verfügt außerdem über Aussparungen 50 im Trichterelement 16 (63;76) zum Aufstecken des Ständers 22 (62;71) für den Stachel 15 (61;70). Das Trichterelement 16 (63;76;80) bündelt den Strom des Inhalts vorteilhafterweise in die Ausgänge 59 des Trichterelements 16 (63;76;80), welche in die Aussparungen 57 (64;81;90) im unbetätigten Dosierknopf 3 (19;54;73) übergehen. Dadurch werden die Aussparungen 57 (64;81;90) im unbetätigten Dosierknopf 3 (19;54;73) vorteilhaft mehr oder weniger mit Pulver gefüllt. Das Pulver bzw. der Inhalt der Aussparungen 57 (64;81;90) im unbetätigten Dosierknopf 3 (19;54;73) wird durch die Lauf- und Verschlussflächen 45 (56;84;89) des Hauptgehäuseteil 13 (18;65) mehr oder weniger davon abgehalten, in die Ansätze 38 (39;58;83;88) des Ausgabeschachtes 10 (40;55;66;82;87) und damit in den Ausgabeschacht 10 (40;55;66;82;87) zu gelangen, da zwischen den Lauf- und Verschlussflächen 45 (56;84;89) des Hauptgehäuseteil 13 (18;65) und der Unterseite des Dosierknopfes 3 (19;54;73) mehr oder weniger kein Platz und somit keine Möglichkeit zum Durchkommen des Inhalts geboten ist. In Figur 13 erkennt man dann unteranderem, wie der Dosierknopf 3 (19;54;73) halb betätigt ist. Das heißt, er befindet sich auf halben weg der vollständigen Dosierung, die zu einer Ausgabe von vorteilhaft Pulver führen würde. Der Dosierknopf 3 (19;54;73) kann dabei vorteilhaft durch einen Daumen und/oder einen anderen Finger betätigt wurden sein. Wichtig dabei ist, dass bei dieser Ausführung eine Stellung zwischen Dosierknopf 3 (19;54;73), Trichterelement 16 (63;76;80) und Hauptgehäuseteil 13 (18;65) bzw. den Lauf- und Verschlussflächen 45 (56;84;89) des Hauptgehäuseteil 13 (18;65) vorhanden ist, in denen es mehr oder weniger weder zu einer teilhaften/vollständigen Ausgabe des Inhalts der in den Aussparungen 57 (64;81;90) im Dosierknopf 3 (19;54;73) vorhanden ist, noch zu einem zusätzlichen Zufluss von Inhalt des Pulverlagers (78), vorteilhaft Pulver kommt. So kann garantiert werden, dass mehr oder weniger zu keinem Zeitpunkt ein mehr oder weniger kontinuierlicher Fluss von Inhalt, vorteilhaft Pulver, von dem Pulverlager (78) und/oder dem Trichterelement 16 (63;76;80) in die Aussparungen 57 (64;81;90) im Dosierknopf 3 (19;54;73), damit den Ansätzen 38 (39;58;83;88) des Ausgabeschachtes 10 (40;55;66;82;87), damit in den Ausgabeschacht 10 (40;55;66;82;87) und damit in die Umgebung herrscht. Dies würde zu einem mehr oder weniger schweren bzw. nicht zu kontrollierenden Menge an dosiertem Inhalt führen. Es ist jedoch eine mehr oder weniger konstante Menge an dosiertem Inhalt gewünscht, welche je nach Dosierung mehr oder weniger nicht schwankt. Dies führt dazu, dass sich der Nutzer je nach benötigter/gewünschter Menge an dosiertem Inhalt entscheiden kann, ob er 1,2,3 oder noch öfter den Knopf betätigt und sich darauf verlassen, dass die Menge an dosiertem Inhalt mehr oder weniger proportional zu der Anzahl der vollständigen Betätigungen des Dosierknopfes 3 (19;54;73) und unabhängig von der Geschwindigkeit der Betätigung ist. Figur 14 zeigt nun unteranderem wie der Dosierknopf 3 (19;54;73) vollständig betätigt ist. Das heißt, er hat mehr oder weniger den ganzen Weg einer vollständigen Betätigung beschritten, die vorteilhaft zu einer Ausgabe von vorteilhaft Pulver führt. Der Dosierknopf 3 (19;54;73) kann dabei vorteilhaft durch einen Daumen und/oder einen anderen Finger betätigt wurden sein. Die vorteilhaft mehr oder weniger gefüllten Aussparungen 57 (64;81;90) im Dosierknopf 3 (19;54;73) schließen damit mehr oder weniger mit den Ansätzen 38 (39;58;83;88) des Ausgabeschachtes 10 (40;55;66;82;87) ab, wodurch eine mehr oder weniger optimale Ausgabe des Inhalts erfolgt. Ein Zufluss von Inhalt aus dem Pulverlager (78) und/oder dem Trichterelement 16 (63;76;80) wird weiterhin blockiert, um die dosierte Menge mehr oder weniger konstant zu halten. Der Inhalt strömt nun, unteranderem aufgrund der Erdanziehungskraft, aus den Aussparungen 57 (64;81;90) im Dosierknopf 3 (19;54;73) in die Ansätze 38 (39;58;83;88) des Ausgabeschachtes 10 (40;55;66;82;87), damit in den Ausgabeschacht 10 (40;55;66;82;87) und damit in die Umgebung. Damit ist die Dosierung abgeschlossen, der Druck, von vorteilhaft einem Daumen und/oder einem anderen Finger, kann damit gelöst bzw. gelockert werden. Die Druckfedern 21 (53;79) für den Dosierknopf 3 (19;54;73) üben vorteilhafterweise eine Kraft in die entgegengesetzte Richtung der ursprünglichen Betätigung aus, wodurch der Dosierknopf 3 (19;54;73) in seine Grundstellung zurückgeschoben wird. Die Bewegung des Dosierknopfes 3 (19;54;73) wird dabei unteranderem durch die Sperrelemente 20 (72) für den Dosierknopf 3 (19;54;73), welche mit den Aussparungen für Sperrelemente 37 im Hauptgehäuseteil 13 (18;65) in Kontakt treten. Der Inhalt des Pulverlagers (78) kann nun unteranderem über das Trichterelement 16 (63;76;80) in die Aussparungen 57 (64;81;90) im Dosierknopf 3 (19;54;73) strömen. Die Dosiervorrichtung ist nun bereit für eine erneute Betätigung bzw. Dosierung und der Dosierprozess ist vollständig abgeschlossen. Die vorderen Enden der Druckfedern 21 (53;79) für den Dosierknopf 3 (19;54;73) befinden sich vorteilhafterweise in passenden Aussparungen 52 im Dosierknopf 3 (19;54;73). Die Enden auf der anderen Seite befinden sich vorteilhafterweise in passenden Aussparungen 44 im Hauptgehäuseteil 13 (18;65). Verklemmen sich einzelne und/oder mehrere Teile des vorteilhafterweise verwendeten Pulvers oder anderen Inhalts zwischen Dosierknopf 3 (19;54;73) und Hauptgehäuseteil 13 (18;65) bzw. den Lauf- und Verschlussflächen 45 (56;84;89) des Hauptgehäuseteil 13 (18;65), kann sich der Dosierknopf 3 (19;54;73) verklemmen, was soviel heißt, dass die Betätigung und/oder das Zurückschieben des Dosierknopfes 3 (19;54;73) mehr oder weniger erschwert ist. Um dieses Problem zu minimieren, kann die Kontaktfläche des Dosierknopfes 3 (19;54;73) mit dem Hauptgehäuseteil 13 (18;65) bzw. den Lauf- und Verschlussflächen 45 (56;84;89) des Hauptgehäuseteil 13 (18;65) vorteilhaft mehr oder weniger auf das minimal nötige reduziert werden. Die mehr oder wenige dünne Wände des Dosierknopfes 3 (19;54;73) bewegen sich vorteilhafterweise auf dem Hauptgehäuseteil 13 (18;65) bzw. den Lauf- und Verschlussflächen 45 (56;84;89) des Hauptgehäuseteil 13 (18;65), haben einen sehr geringen Minimalabstand zu dem Hauptgehäuseteil 13 (18;65) bzw. den Lauf- und Verschlussflächen 45 (56;84;89) des Hauptgehäuseteils 13 (18;65) und sichern damit die gewünschte Funktionalität. Mehr oder weniger die restlichen sonstigen Kontaktflächen des Dosierknopfes 3 (19;54;73) mit dem Hauptgehäuseteil 13 (18;65) bzw. den Lauf- und Verschlussflächen 45 (56;84;89) des Hauptgehäuseteil 13 (18;65) wurden entfernt und durch untere Aussparungen 60 am Dosierknopf 3 (19;54;73) ersetzt. Diese Aussparungen 60 weisen einen deutlich höheren Abstand zu dem Hauptgehäuseteil 13 (18;65) bzw. den Lauf- und Verschlussflächen 45 (56;84;89) des Hauptgehäuseteil 13 (18;65) auf, wodurch ein Verklemmen vorteilhafterweise unwahrscheinlicher wird.

Der Deckel 4 (7;14;49) verfügt über Aussparungen 46 für Verschlusselemente, in welche die Verschlusselemente 5 (17) einhaken/eingreifen können, wodurch der Deckel 4 (7;14;49) auf dem

Hauptgehäuseteil 13 (18;65) gehalten/befestigt wird. Die Verschlusselemente 5 (17) lassen sich vorteilhaft durch einen oder mehrere Finger mehr oder weniger nach innen drücken, da sich das Material dehnen lässt, bzw. natürlicherweise etwas biegbar/flexibel ist, wodurch die Verschlusselemente 5 (17) aus den Aussparungen 46 für Verschlusselemente ausgehakt/ausgegriffen werden, wodurch der Deckel 4 (7;14;49) mehr oder weniger nicht mehr an dem Hauptgehäuseteil 13 (18;65) gehalten/befestigt ist, wodurch er sich vorteilhafterweise durch die oder mehrere Hände oder Finger von dem Hauptgehäuseteil 13 (18;65) lösen und entfernen lässt.

Als vorteilhafte Materialien für den Großteil der Dosiervorrichtung, den Ständer 22 (62;71) für den Stachel 15 (61;70), das Hauptgehäuseteil 13 (18;65), den Dosierknopf 3 (19;54;73), das Trichterelement 16 (63;76;80), den Deckel 4 (7;14;49) und der Halterung 1 (27;30;34), kommen harte Kunststoffe in Betracht. Insbesondere sind Materialien wie Acrylnitril-Butadien-Styrol- Copolymere (kurz ABS) oder Polyactide (kurz PLA) geeignet. Für den Stachel 15 (61:70) und die Druckfedern 21 (53;79) für den Dosierknopf 3 (19;54;73) sind Metalle, wie bspw. Stahl, Aluminium, Weißblech, vorteilhaft. Für die Magnete 11 der Dosiervorrichtung 2 (28) und die Magnete 31 des Ausführungsbeispiels der Halterung 1 (27;30;34) ist unteranderem Neodym ein empfehlenswertes Material.

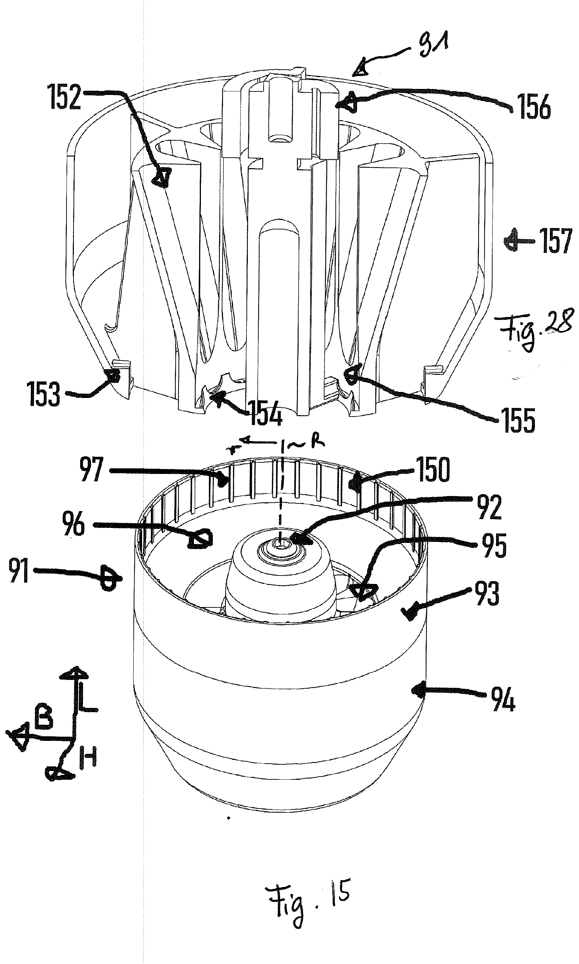

Figur 15 ist eine vereinfachte Ansicht eines universellen Dosierers 91 gemäß Aspekten der vorliegenden Offenbarung, in der man den universellen Dosierer 91 gemäß Aspekten der vorliegenden Offenbarung perspektivisch und teilweise von oben sieht. Links unten ist ein Koordinatensystem angedeutet, dass die Richtungen für Länge L, Breite B und Höhe H angibt. Ferner ist die Rotationsachse R angegeben, um die sich die erste Komponenten 122, 128 (siehe andere Figuren) um die zweite Komponente 114, 120 (siehe andere Figuren) drehen lässt. Es ist ebenfalls die Rotationsachse R und die radiale Richtung r angegeben. Diese Richtungen gelten auch für die weiteren Figuren.

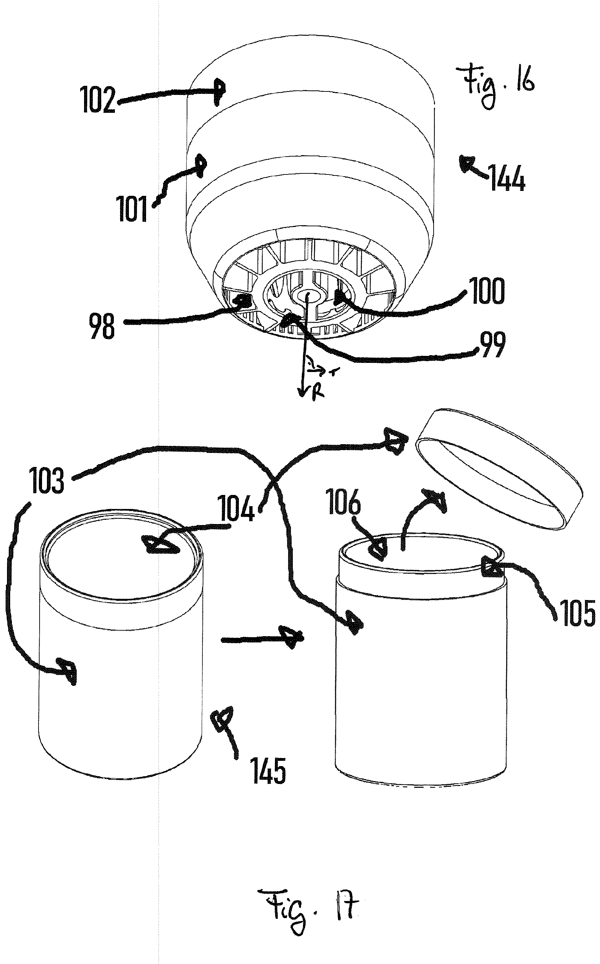

Figur 16 ist eine vereinfachte Ansicht eines universellen Dosierers 144 gemäß Aspekten der vorliegenden Offenbarung, in der man den universellen Dosierer 144 gemäß Aspekten der vorliegenden Offenbarung teilweise von unten sieht.

Figur 17 ist eine vereinfachte Ansicht eines Nachfüllpacks 145 gemäß Aspekten der vorliegenden Offenbarung, in der man im linken Bereich ein geschlossenes Nachfüllpack 145 gemäß Aspekten der vorliegenden Offenbarung erkennt. Im rechten Bereich ein geöffnetes Nachfüllpack 145 gemäß Aspekten der vorliegenden. Dabei sieht man die Figuren teilweise von oben.

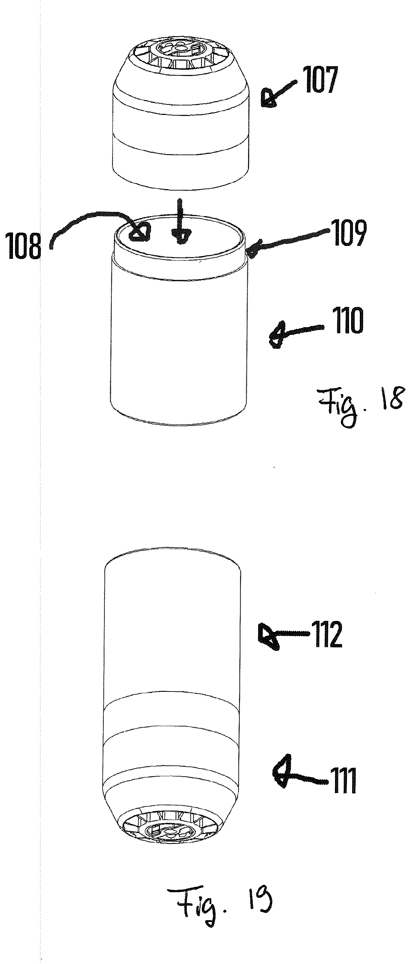

Figur 18 ist eine vereinfachte Ansicht eines universellen Dosierers 107 und eines Nachfüllpack-Hauptteils 110 im getrennten Zustand gemäß Aspekten der vorliegenden Offenbarung, in der man den universellen Dosierer 107 und das Nachfüllpack-Hauptteil 110 gemäß Aspekten der vorliegenden Offenbarung teilweise von unten sieht.

Figur 19 ist eine vereinfachte Ansicht eines universellen Dosierers 111 und eines Nachfüllpack-Hauptteils 112 gemäß Aspekten der vorliegenden Offenbarung, in der man den universellen Dosierer 111 und das Nachfüllpack-Hauptteil 112 gemäß Aspekten der vorliegenden Offenbarung teilweise von unten sieht.

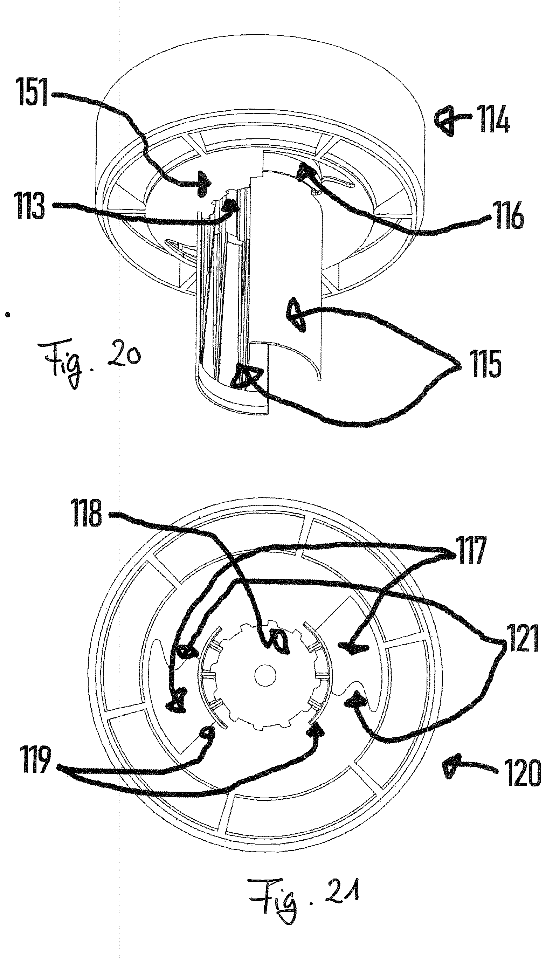

Figur 20 ist eine vereinfachte Ansicht eines Hauptgehäuseteils (zweite Komponente) 114 gemäß Aspekten der vorliegenden Offenbarung, in der man das Hauptgehäuseteil (zweite Komponente) 114 gemäß Aspekten der vorliegenden Offenbarung teilweise von unten sieht.

Figur 21 ist eine vereinfachte Ansicht eines Hauptgehäuseteils (zweite Komponente) 120 gemäß Aspekten der vorliegenden Offenbarung, in der man das Hauptgehäuseteil (zweite Komponente) 120 gemäß Aspekten der vorliegenden Offenbarung senkrecht von unten sieht.

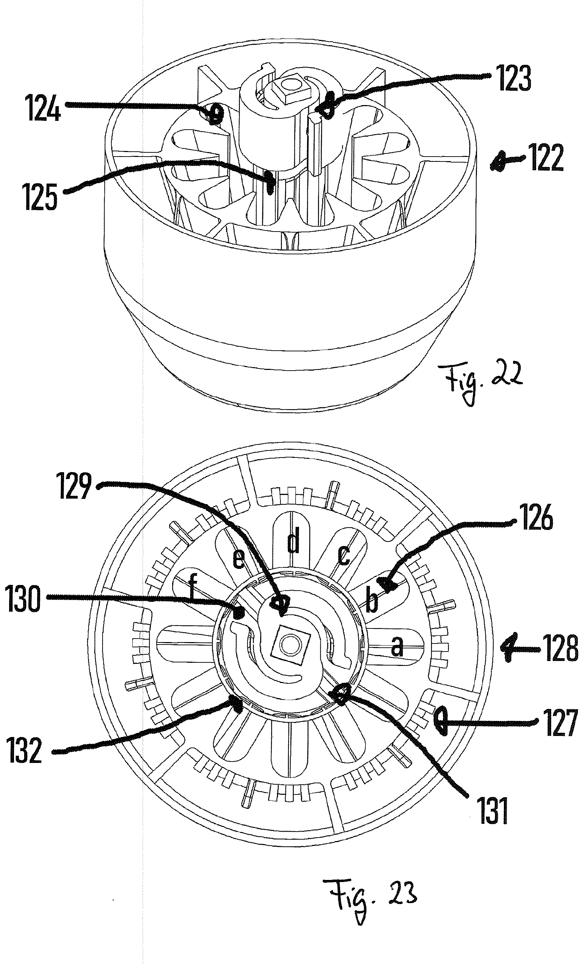

Figur 22 ist eine vereinfachte Ansicht eines Hauptgehäuseteils (erste Komponente) 122 gemäß Aspekten der vorliegenden Offenbarung, in der man das Hauptgehäuseteil (erste Komponente)122 gemäß Aspekten der vorliegenden Offenbarung teilweise von oben sieht.

Figur 23 ist eine vereinfachte Ansicht eines Hauptgehäuseteils (erste Komponente) 128 gemäß Aspekten der vorliegenden Offenbarung, in der man das Hauptgehäuseteil (erste Komponente) 128 gemäß Aspekten der vorliegenden Offenbarung senkrecht von oben sieht.

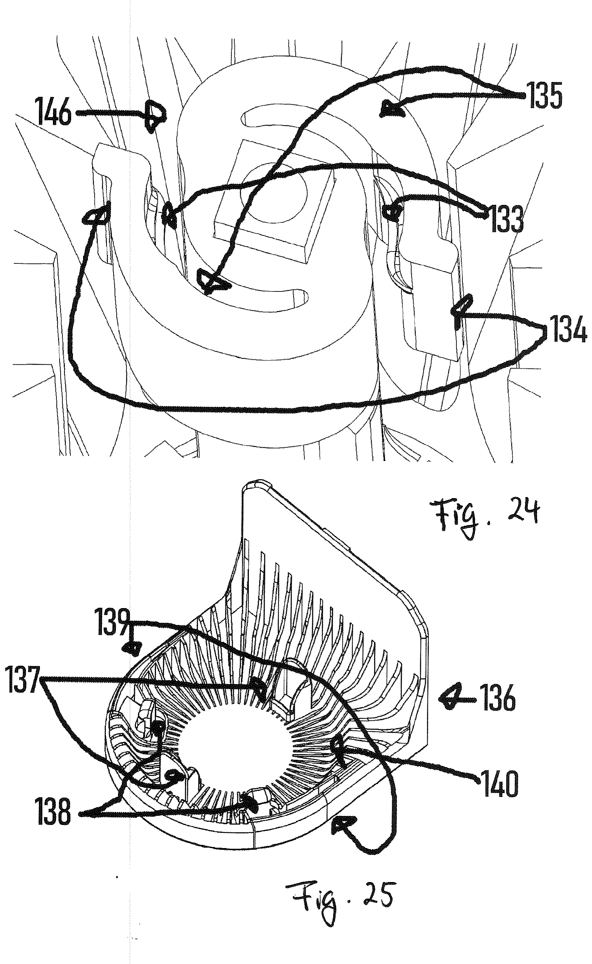

Figur 24 ist ein Ausschnitt einer vereinfachten Ansicht eines Hauptgehäuseteils (erste Komponente) gemäß Aspekten der vorliegenden Offenbarung, in der man das Hauptgehäuseteil (erste Komponente) gemäß Aspekten der vorliegenden Offenbarung teilweise von oben sieht. In dieser Ansicht erkennt man das Rastelement 146 in größerer Ansicht.

Figur 25 ist eine vereinfachte Ansicht eines Wandhalters 136 gemäß Aspekten der vorliegenden Offenbarung, in der man den Wandhalter 136 gemäß Aspekten der vorliegenden Offenbarung teilweise von unten sieht.

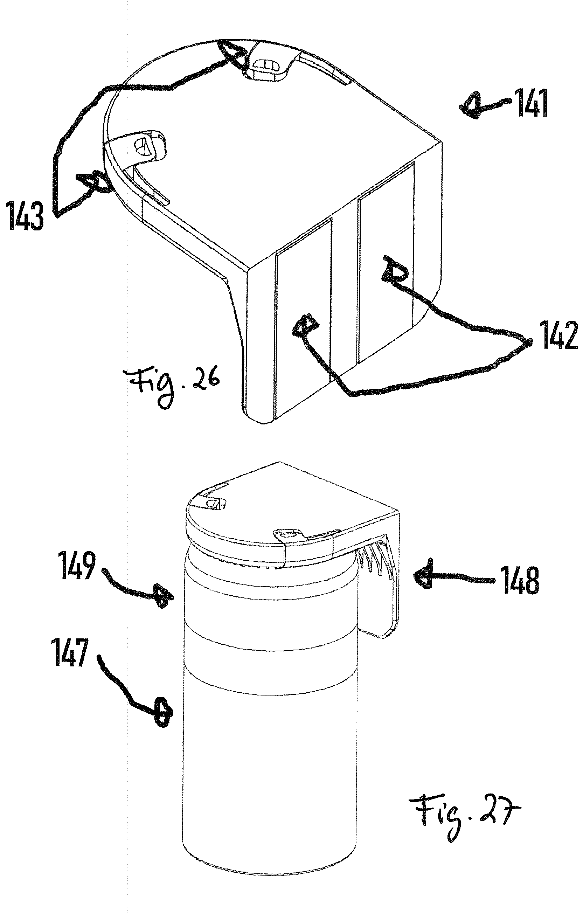

Figur 26 ist eine vereinfachte Ansicht eines Wandhalters 141 gemäß Aspekten der vorliegenden Offenbarung, in der man den Wandhalter 141 gemäß Aspekten der vorliegenden Offenbarung teilweise von oben sieht.

Figur 27 ist eine vereinfachte Ansicht eines Universellen Dosierers 149 mit eingestecktem Nachfüllpack-Hauptteil 147, gehalten von einem Wandhalter 148 gemäß Aspekten der vorliegenden Offenbarung, in der man den Universellen Dosierers 149 mit eingestecktem Nachfüllpack-Hauptteil 147, gehalten von einem Wandhalter 148 gemäß Aspekten der vorliegenden Offenbarung teilweise von unten sieht.

Figur 28 ist eine vereinfachte Ansicht eines Hauptgehäuseteils (erste Komponente) 157 gemäß Aspekten der vorliegenden Offenbarung, in der man das Hauptgehäuseteil (erste Komponente) 157 gemäß Aspekten der vorliegenden Offenbarung teilweise von oben sieht. Das Hauptgehäuseteil (erste Komponente) 157 wurde dabei in Längsrichtung senkrecht mittig aufgeschnitten, um besser Sicht zu bieten.

Allgemein zeigen die Figuren einen universellen Dosierer (Dosiervorrichtung) 91 (144; 107; 111; 149) für ein Vorratsmittel, insbesondere in flüssiger Form oder Pulverform, wobei der Dosiermechanismus derart ausgestaltet ist, dass er innerhalb eines Betätigungszyklus eine festgelegte Menge Vorratsmittel in den Ausgabeschacht 100 (130; 155) entlässt, wobei der Vorratsbereich 108 und der Ausgabeschacht 100 (130; 155) zu keinem Zeitpunkt des Betätigungszyklus in direkter Kommunikation stehen.

Der Ausgabeschacht 100, 130, 155 der Dosiervorrichtung kann vorteilhaft sehr kurz (bezüglich der Ausgaberichtung des Vorratsmittels) im Verhältnis zur Länge L des Dosierers sein. Insbesondere kann der Ausgabeschacht kürzer als 10 mm und vorteilhaft kleiner als 5 mm sein.

Das Nachfüllpack 145, bestehend aus Nachfüllpack-Hauptteil 103 (110; 112; 147) und Nachfüllpack-Deckel 104, kann vorteilhafterweise unter Anderem aus Pappe oder Papier gefertigt sein. Das Nachfüllpack 145, gefüllt mit einem Vorratsmittel, insbesondere in flüssiger Form oder Pulverform, kann durch Abnahme des Nachfüllpack-Deckels 104 geöffnet werden. Um den universellen Dosierer 91 (144; 107; 111; 149) zum Dosieren vorzubereiten, kann er senkrecht auf das Nachfüllpack-Hauptteil 103 (110; 112; 147) aufgesteckt werden. Dieser Schritt ist insbesondere in Figur 18 dargestellt. Da der Durchmesser des Nachfüllpack-Klemmrands 109 vorteilhafterweise mehr oder weniger dem der Nachfüllpack-Aufnahme 150 des universellen Dosierers 91 (144; 107; 111; 149) entspricht und die Klemmblöcke 97 mehr oder weniger in das mehr oder weniger verformbare Material des Nachfüllpack-Klemmrands 109 eingreifen, ist das Nachfüllpack-Hauptteil 103 (110; 112; 147) nach dem Aufstecken vorteilhafterweise mehr oder weniger fest mit dem universellen Dosierer 91 (144; 107; 111; 149) verbunden.

Wird der universelle Dosierer 91 (144; 107; 111; 149) nun vorteilhafterweise mit dem Ausgabeschacht 100 (130; 155) mehr oder weniger nach unten ausgerichtet, strömt das Vorratsmittel durch die Erdanziehungskraft vorteilhafterweise mehr oder weniger auf die Trichterschrägung 96.

Die Kammerfreigabeausnehmungen (Ausnehmungen) 116 (117) ermöglichen dem Vorratsmittel sich vorteilhafterweise aus der Trichterschrägung 96 bzw. dem Nachfüllpack-Hauptteil 103 (110; 112; 147) in jeweils zwei vorteilhafterweise ungefüllte Kammern 95 (124;126;152) zu bewegen. Die vorteilhafterweise 12 Kammern 95 (124;126;152), sind kreisförmig angeordnet und laufen unten zu dem Ausgabeschacht 100 (130; 155) mittig schräg zu. Damit das Vorratsmittel mehr oder weniger gut aus den Kammern 95 (124;126;152) Richtung Ausgabeschacht 100 (130; 155) entweichen kann, sobald diese freigegeben werden, sind die Kammern 95 (124;126;152) vorteilhafterweise hinten gerundet und die Seitenwände laufen jeweils mehr oder weniger parallel oder zu dem Ausgabeschacht 100 (130; 155) breit zu, jedoch vorteilhafterweise nicht schmaler Richtung des Ausgabeschachtes 100 (130; 155). Die übrigen Kammern 95 (124;126;152) sind nach oben hin gesperrt, da die Verschlussebene (Verschlussplatte) 151 vorteilhafterweise mehr oder weniger direkt auf ihnen liegt. Das Vorratsmittel kann nicht über die gerade befüllten Kammern 95 (124;126;152) in den Ausgabeschacht 100 (130; 155) entweichen, da die Verschlusselemente (Sperrelemente) 115 (119) die Kammern verschließen. Um das Vorratsmittel bei Bedarf auszugeben, kann man das Hauptgehäuseteil (zweite Komponente) 93 (102; 114; 120) gegen das Hauptgehäuseteil (erste Komponente) 94 (101; 122; 128; 157) drehen. Die korrekte Drehrichtung wird dabei durch das Rastelement 123 (129; 146; 156) vorgegeben. Vorteilhafterweise kann das Hauptgehäuseteil (erste Komponente) 94 (101; 122; 128; 157) von unten gesehen im Uhrzeigersinn gedreht werden. Bei Rotation von 30° in die korrekte Richtung, sind die beiden jeweils zuerst gefüllten Kammern 95 (124;126;152) nach oben durch die Verschlussebene (Verschlussplatte) 151 geschlossen, in Richtung des Ausgabeschachtes 100 (130; 155) durch die Verschlusselemente (Sperrelemente) 115 (119). In die beiden Kammern 95 (124;126;152) kann somit in der aktuellen Position mehr oder weniger kein neues Vorratsmittel einströmen, sowie entweichen. Bei weiterer Rotation von 30° in die korrekte Richtung, sind die beiden gefüllten Kammern 95 (124;126;152) nach oben durch die Verschlussebene (Verschlussplatte) 151 geschlossen, in Richtung des Ausgabeschachtes 100 (130; 155) jedoch nicht mehr durch die Verschlusselemente (Sperrelemente) 115 (119). In die beiden Kammern 95 (124;126;152) kann somit in der aktuellen Position mehr oder weniger kein neues Vorratsmittel einströmen, jedoch in Richtung des Ausgabeschachtes 100 (130; 155) entweichen. Der beschriebene Prozess wiederholt sich so mit jeder neu gefüllten Kammer 95 (124;126;152).

Vereinfacht kann er anhand der Kammern 95 (124;126;152) in Figur 23 gut beschrieben werden:
- Kammer a und b: nach oben durch Kammerfreigabeausnehmungen (Ausnehmungen) 116 (117) geöffnet, zum Ausgabeschacht 100 (130; 155) durch Verschlusselement (Sperrelement) 115 (119) geschlossen. Es kann somit neues Vorratsmittel ein-, jedoch nicht Richtung Ausgabeschachte 100 (130; 155) austreten.
- Kammer c: nach oben durch Kammerfreigabeausnehmungen (Ausnehmungen) 116 (117) geschlossen, zum Ausgabeschacht 100 (130; 155) durch Verschlusselement (Sperrelement) 115 (119) geschlossen. Es kann somit kein Vorratsmittel ein-, oder austreten. Ein direkter Durchfluss von Vorratsbereich 108 zu Ausgabeschacht 100 (130; 155) wird somit verhindert, wodurch eine konstante Ausgabemenge gewährleistet wird.
- Kammer e und f: nach oben durch Kammerfreigabeausnehmungen (Ausnehmungen) 116 (117) geschlossen, zum Ausgabeschacht 100 (130; 155) durch Verschlusselement (Sperrelement) 115 (119) geöffnet. Es kann somit kein Vorratsmittel ein-, jedoch austreten. Die Kammern 95 (124;126;152) leeren sich somit durch die Erdanziehungskraft und eine gewisse Menge Vorratsmittel wird über den Ausgabeschacht 100 (130; 155) ausgegeben.

Die beschriebenen Prozesse finden gleichzeitig bei den übrigen 6 Kammern 95 (124;126;152) statt, wodurch eine größere Ausgabemenge bei kleinerem Einzelfassungsvermögen der Kammern 95 (124;126;152) und kleinerer Rotation pro Ausgabe erreicht wird.

Für eine angenehme Ausgabe von Vorratsmittel ist es vorteilhaft, die sich bei zwölf Kammern 95 (124;126;152) ergebenden Rotationsschritte von 30° einzuhalten.

Um dem Anwender dies zu vereinfachen, ist vorteilhafterweise ein Rastmechanismus vorhanden. Dieser besteht vorteilhafterweise aus einem durch ein senkrechtes Verbindungselement 125 vorteilhafterweise fest mit dem Hauptgehäuseteil (erste Komponente) 94 (101; 122; 128; 157) verbundenen Rastelement 123 (129; 146; 156) und am Hauptgehäuseteil (zweite Komponente) 93 (102; 114; 120) vorhandenen Rasteinkerbungen 113 (118), welche radial in 30°-Schritten angeordnet sind. Die Rastelement-Greifzähne 134 greifen dabei vorteilhafterweise in die Rasteinkerbungen 113 (118) ein. Entgegen der vorgesehenen Drehrichtung sind jeweils die Rasteinkerbungen 113 (118) und die Rastelement-Greifzähne 134 im Wesentlichen eckig gestaltet, um eine Rotation zu verhindern. In Richtung der korrekten Drehrichtung sind jeweils die Rasteinkerbungen 113 (118) und die Rastelement-Greifzähne 134 gerundet gestaltet, um eine Rotation nicht zu verhindern. Bei einer ausreichenden ausgeübten Rotationskraft in korrekte Richtung, geben die Rastelement-Federelemente 135 nach, wodurch sich die Rastelement-Greifzähne 134 Richtung Mitte aus den Rasteinkerbungen 113 (118) bewegen können. Einer Rotation steht nach dem ersten großen Widerstand deutlich weniger entgegen, wodurch der Anwender zum Weiterdrehen animiert wird. Sobald die vorgesehene Rotation von 30° erreicht ist, schnappen die Rastelement-Greifzähne 134 erneut in die Rasteinkerbungen 113 (118) ein, wodurch die Rotation erneut stark erschwert wird. Durch das schnelle Einschnappen wird des Weiteren vorteilhafterweise ein Geräusch erzeugt. Der Anwender hat so klares haptisches und akustisches Feedback, dass eine Rotation von 30° vervollständigt ist.

Damit eine korrekte Funktionsweise des Rastelements 123 (129; 146; 156) auch gewährleistet ist, wenn ein Teil des eventuell pulverförmigen Vorratsmittel in die Lücken des Rastelements 123 (129; 146; 156) gerät, sind die Rastelement-Federelemente 135 an deren Enden ausgekerbt. Um die Stabilität an diesen Stellen zu erhöhen, sind vorteilhafterweise Rastelement-Versteifungsrippen 133 angebracht, welche vorteilhafterweise so flach sind, dass diese das eventuell in den Lücken vorhandene pulverförmige Vorratsmittel aus deren Weg drücken.

Wird ein pulverförmiges Vorratsmittel dosiert, kann dieses je nach Körnung zwischen die Trennwände der Kammern 95 (124;126;152) und der Verschlusselemente (Sperrelemente) 115 (119) gelangen. Dadurch können die Verschlusselemente (Sperrelemente) 115 (119) aufgrund ihrer geringen Wandstärke verformt bzw. Richtung Mitte gedrückt werden. Um dem entgegenzuwirken, sind an dem Hauptgehäuseteil (erste Komponente) 94 (101; 122; 128; 157) Arretierungselemente 99 (132; 154) angebracht. Die unteren Enden der Verschlusselemente (Sperrelemente) 115 (119) liegen dabei an den Arretierungselementen 99 (132; 154), wodurch die Verschlusselemente (Sperrelemente) 115 (119) davon abgehalten werden, sich Richtung Mitte zu deformieren. Die sich in 30°-Schritten wiederholende Form der Arretierungselemente 99 (132; 154) ist so gewählt, dass das aus den Kammern 95 (124;126;152) strömende Vorratsmittel möglichst wenig blockiert wird. An den Mitten der Kammern 95 (124;126;152) sind die Arretierungselemente 99 (132; 154) am niedrigsten gestaltet, während sie zwischen den Kammern 95 (124;126;152) am höchsten gestaltet sind.

Wird ein mehr oder weniger pulverförmiges Vorratsmittel dosiert, kann es zwischen den oberen Enden der Trennwände der Kammern 95 (124;126;152) und der Kante, an welchen die Kammerfreigabeausnehmungen (Ausnehmungen) 116 (117) enden zu mehr oder weniger starken Verklemmungen des Vorratsmittels kommen. Die Rotation kann dadurch mehr oder weniger erheblich erschwert werden. Um dem entgegenzuwirken, wurde sich an den betroffenen Kanten für eine nicht einfache, gerade Kontur entschieden. Stattdessen wurde eine spitzzulaufende Kontur gewählt. Die spitzzulaufenden Drehwiderstandverringerer 121 verringern den entstehenden Widerstand, welcher einer Rotation des Hauptgehäuseteils (zweite Komponente) 93 (102; 114; 120) gegen das Hauptgehäuseteil (erste Komponente) 94 (101; 122; 128; 157) entgegenwirkt.

Das Hauptgehäuseteil (zweite Komponente) 93 (102; 114; 120), sowie das Hauptgehäuseteil (erste Komponente) 94 (101; 122; 128; 157) sind vorteilhafterweise so konstruiert, dass sie jeweils als ein Stück per Kunststoff-Spritzguss gefertigt werden können. Um unter Anderem Kosten bei den nötigen Werkzeugen zu sparen, wurden Hinterschnitte in den Bauteilen vermieden. Beide Bauteile werden durch eine Verbindungsschraube 92 zusammengehalten.

Vorteilhafterweise kann der universelle Dosierer 91 (144; 107; 111; 149) durch einen Wandhalter 136 (141; 148) an unterschiedlichsten Oberflächen, insbesondere Wänden und Schränken temporär befestigt werden. Der Wandhalter 136 (141; 148) verfügt vorteilhafterweise über Klebestreifen 142 auf seiner Rückseite, durch welche er an den jeweiligen Oberflächen gehalten werden kann. Der universelle Dosierer 91 (144; 107; 111; 149) kann je nach Orientierung des Wandhalters 136 (141; 148) senkrecht von unten oder oben an den Wandhalter 136 (141; 148) gesteckt werden. Gehalten wird der universelle Dosierer 91 (144; 107; 111; 149) durch an dem Wandhalter 136 (141; 148) angebrachte Verbindungshaken 138, welche sich an den Halterrippen 127 (153) einhaken. Dafür greifen sie in die Halterschächte 98 des Hauptgehäuseteils (erste Komponente) 94 (101; 122; 128; 157) ein. Bei ausreichend aufgebrachter Kraft, parallel zu der Einsteckrichtung, federn die Verriegelungselemente 139 (142) die Verbindungshaken 138 nach Innen, sodass der universelle Dosierer 91 (144; 107; 111; 149) eingeführt werden kann. Um den universellen Dosierer 91 (144; 107; 111; 149) bei Bedarf wieder aus dem Wandhalter 136 (141; 148) zu entfernen, müssen beide Verriegelungselemente 139 (142) gleichzeitig betätigt werden. Die Verbindungshaken 138 greifen damit aus den Halterrippen 127 (153) des Hauptgehäuseteils (erste Komponente) 94 (101; 122; 128; 157) aus, wodurch der universelle Dosierer 91 (144; 107; 111; 149) entfernt werden kann.

Damit dem Anwender das Einhaken in den Wandhalter 136 (141; 148) vereinfacht wird, sind an ihm Orientierungselemente 137 angebracht. Diese greifen durch ihre Höhe, höher als die Verbindungshaken 138, vor den Verbindungshaken 138 in die Halterschächte 98 des Hauptgehäuseteils (erste Komponente) 94 (101; 122; 128; 157) ein. Durch ihre starke Abrundung zu deren Enden wird das Treffen der Halterschächte 98 vereinfacht. So wird sichergestellt, dass sich das Hauptgehäuseteil (erste Komponente) 94 (101; 122; 128; 157) in korrekter Position befindet, damit die Verbindungshaken 138 die Halterschächte 98 erreichen.

Ist der universelle Dosierer 91 (144; 107; 111; 149) durch die Verbindungshaken 138 befestigt, wird er durch radial angeordnete Verstärkungselemente 140 seitlich stabilisiert.

Der gesamte Wandhalter 136 (141; 148) ist vorteilhafterweise so konstruiert, dass er als ein Stück per Kunststoff-Spritzguss gefertigt werden kann. Um unter Anderem Kosten bei den nötigen Werkzeugen zu sparen, wurden Hinterschnitte in den Bauteilen vermieden.

Dadurch, dass der universelle Dosierer 91 (144; 107; 111; 149) nur aus dem Wandhalter 136 (141; 148) entfernt werden kann, sofern beide Verriegelungselemente 139 (142) gleichzeitig betätigt werden, ist es jüngeren Kindern erschwert Zugang zu dem universellen Dosierer 91 (144; 107; 111; 149) und damit zu dem für sie schädlichen Vorratsmittel zu gelangen.

Die Verschlusselemente (Sperrelemente) 115 (119) nehmen vorteilhafterweise etwas mehr als die mindestens erforderlichen 60° ein, die mindestens nötig sind, um zwei Kammern 95 (124;126;152) Richtung des Ausgabeschachtes 100 (130; 155) zu verschließen. Dies ist vorteilhaft, da so bei leicht abweichenden Drehperioden (beispielsweise 32° statt 30°) die korrekte Funktion immer noch aufrechterhalten wird und kein Pulver der nächsten Kammern 95 (124;126;152), welche bis zur nächsten Betätigung verschlossen bleiben sollten, entweichen kann.

Die Sperrelemente 115, 119 können somit (vgl. Figur 21) jeweils drei nebeneinanderliegende Kammern, nämlich eine erste, eine zweite und eine dritte Kammer, vom Ausgabeschacht trennen. In Umlaufrichtung können dann vorteilhaft, die erste und zweite Kammer mit dem Vorratsbereich kommunizieren, also befüllt werden, die dritte Kammer ist sowohl zum Vorratsbereich als auch zum Ausgabeschacht hin verschlossen. Erst wenn eine weitere Betätigung (bspw. eine Drehung um 30°) erfolgt, wird die dritte Kammer zum Ausgabeschacht hin geöffnet.

Zusammenfassend wird hier also eine manuelle Dosiervorrichtung 91 (144; 107; 111; 149) bereitgestellt, die als Aufsatz ausgestaltet ist, der mit einer Vorratspackung (Nachfüllpack) koppelbar ist. Hierdurch wird der Vorratsbereich der Dosiervorrichtung, der dann sehr kurz und klein ausfällt erweitert bzw. weitestgehend durch die Vorratspackung (Nachfüllpack) gebildet.

Die Dosiervorrichtung kann mindestens eine erste Komponente 122, 128 und eine zweite Komponente 114, 120 umfassen, die relativ zueinander um eine Rotationsachse rotierbar sind.

Die erste Komponente 122, 128 kann eine Mehrzahl von gleichförmigen Kammern 95, 124, 126, 152 aufweisen, die sich radial r von der Rotationsachse R weg und entlang der Rotationsachse R erstrecken und gleichmäßig umlaufend um die Rotationsachse R angeordnet sind.

Die Dosiervorrichtung kann eine Verschlussebene, bspw. eine Verschlussplatte 151, aufweisen, die ausgestaltet ist, um eine erste Auswahl von Kammern gegenüber dem Vorratsbereich bzw. der Vorratspackung zu verschließen. Insbesondere können in einer Position alle Kammern bis auf eine zweite Auswahl von Kammern verschlossen sein. Die zweite Auswahl kann eine oder vorzugsweise zwei, vorteilhaft zwei Paare von Kammern umfassen. Die Verschlussebene 151 kann Ausnehmungen aufweisen, durch welche Vorratsmittel vom Vorratsbereich zu einer zweiten Auswahl von Kammern gelangen kann. Somit können in einer Position bspw. immer eine oder zwei, oder zwei Paare von Kammern mit dem Vorratsbereich kommunizieren, also mit Vorratsmittel befüllt werden.

Die zweite Komponente 114, 120 kann Sperrelemente (Verschlusselemente) 115, 119 aufweisen, die ausgestaltet sind, um eine dritte Auswahl von Kammern selektiv gegenüber einem Ausgabeschacht 155 zu verschließen. Bei der zweiten und dritten Auswahl von Kammern kann es sich in einer Position bspw. um jeweils zwei paarweise nebeneinanderliegende Kammern handeln, wobei sich vorteilhaft zwei Paare radial gegenüberliegen. Entsprechend würden dann zwei gleichförmige Sperrelemente radial gegenüberliegend vorgesehen sein. In einer noch vorteilhafteren Ausgestaltung können die Sperrelemente 115, 119 jeweils drei nebeneinanderliegende Kammern, nämlich eine erste, eine zweite und eine dritte Kammer, vom Ausgabeschacht trennen. In Umlaufrichtung können dann vorteilhaft die erste und zweite Kammer mit dem Vorratsbereich kommunizieren, also befüllt werden und die dritte Kammer ist sowohl zum Vorratsbereich als auch zum Ausgabeschacht hin verschlossen. Erst wenn eine weitere Betätigung (bspw. eine Drehung um 30°) erfolgt, wird die dritte Kammer zum Ausgabeschacht hin geöffnet.

In einer Ausgestaltung können eine, zwei, vier, sechs, acht, zehn, vorteilhaft zwölf gleichartige Kammern 95, 124, 126, 152 vorgesehen sein. Diese können sich alle radial r von der Rotationachse R weg und entlang der Rotationsachse R erstrecken und gleichmäßig umlaufend um die Rotationsachse angeordnet sein. Es können eine, zwei, vier, sechs, acht, zehn, vorteilhaft zwölf gleichartige Kammern 95, 124, 126, 152 vorgesehen sein, die sich zur Verschlussebene und zur Rotationsachse öffnen und selektiv von den Sperrelementen und der Verschlussebene verschlossen und freigegeben werden.

Bei einer Mehrzahl von Kammern, insbesondere zwölf Kammern, kann bzw. können mindestens eine der Kammern, insbesondere zwei radial gegenüberliegende Kammern, besonders vorteilhaft zwei Paare von radial gegenüberliegenden Kammern, in einer ersten Position mit dem Vorratsbereich kommunizieren und nicht mit einem Ausgabeschacht kommunizieren. In einer zweiten Position kann jeweils eine Kammer eines Paares nicht mit dem Vorratsbereich und nicht mit einem Ausgabeschacht 155 kommunizieren, und in einer dritten Position kann die jeweils eine Kammer mit dem Ausgabeschacht 155, nicht aber mit dem Vorratsbereich kommunizieren. In einer Ausgestaltung kann also in der dritten Position jeweils nur eine Kammer eines jeden Paares von Kammern mit dem Ausgabeschacht kommunizieren.

Die Dosiervorrichtung kann weiter ausgestaltet sein, so dass während eines Betätigungszyklus von einer ersten Position zu einer zweiten Position oder von einer zweiten Position zu einer dritten Position oder von einer dritten zu einer ersten Position gewechselt wird., so dass das eine oder mehrere Sperrelemente 115, 119 und die Verschlussebene 151 jeweils je nach Position so angeordnet sind, dass diese die jeweiligen Kammern je nach Position freigeben oder sperren.

Während eines Betätigungszyklus kann die erste Komponente 122, 128 gegenüber der zweiten Komponente 114, 120 jeweils um einen vorgegebenen Winkel, insbesondere um 30°, um die Rotationsachse R gedreht werden, so dass ein Wechsel der Position in einer Rotation um den vorgegebenen Winkel besteht.

### Bezugszeichenliste

| Bezugszeich en | | Bezeichnung |
|---|---|---|
| 1 | | Halterung |
| 2 | | Dosiervorrichtung |
| 3 | | Dosierknopf |
| 4 | | Deckel |
| 5 | | Verschlusselement |
| 6 | | Riffelung |
| 7 | | Deckel |
| 8 | | Verschlusselement |
| 9 | | Dosierknopf (in betätigtem bzw. gedrücktem Zustand) |
| 10 | | Ausgabeschacht |
| 11 | | Magnete der Dosiervorrichtung |
| 12 | | Riffelung |
| 13 | | Hauptgehäuseteil |
| 14 | | Deckel |
| 15 | | Stachel (Schneidelement) |
| 16 | | Trichterelement |
| 17 | | Verschlusselement |
| 18 | | Hauptgehäuseteil |
| 19 | | Dosierknopf |
| 20 | | Sperrelement für Dosierknopf |
| 21 | | Druckfedern für Dosierknopf |
| 22 | | Ständer für Stachel |
| 23 | | Magazinfaltelement (Öffnungselement) |
| 24 | | Aussparung an Deckel für Verschlusselement |
| 25 | | Aussparungen an Ständer für Stachel |
| 26 | | Aussparung an Stachel |
| 27 | Halterung | |
| 28 | Dosiervorrichtung | |
| 29 | Montagelement an Halterung | |
| 30 | Halterung | |
| 31 | Magnete der Halterung | |
| 32 | Aussparung in Halterung für Dosiervorrichtung | |
| 33 | Aussparung an Halterung | |
| 34 | Halterung | |
| 35 | Doppelseitige Klebestreifen an Halterung | |
| 36 | | Aussparungen in Hauptgehäuseteil für Druckfedern |
| 37 | | Aussparungen in Hauptgehäuseteil für Sperrelemente |
| 38 | | Ansätze des Ausgabeschachtes |
| 39 | | Ansätze des Ausgabeschachtes |
| 40 | | Ausgabeschacht |
| 41 | | Aussparungen in Hauptgehäuseteil für Sperrelemente |
| 42 | | Positionierungsschienen für Magazin |
| 43 | | Lippe zur Auflage von Magazin |
| 44 | | Aussparungen in Hauptgehäuseteil für Druckfedern |
| 45 | | Lauf-&Verschlussfläche |
| 46 | | Aussparungen an Deckel für Verschlusselemente |
| 47 | | Auflageelemente des Deckels |
| 48 | | Versteifungs- und Auflageelemente des Deckels |
| 49 | | Deckel |
| 50 | | Aussparungen in Trichterelement zum Aufstecken des Ständers für den Stachel |
| 51 | | Trichterelement |
| 52 | | Aussparungen in Dosierknopf für Druckfedern |
| 53 | | Druckfedern für Dosierknopf |
| 54 | | Dosierknopf |
| 55 | | Ausgabeschacht |
| 56 | | Lauf-&Verschlussfläche |
| 57 | | Aussparungen im Dosierknopf zum temporären Verstauen des Pulvers (Kammern) |
| 58 | | Ansätze des Ausgabeschachtes |
| 59 | | Ausgänge des Trichterelements |
| 60 | | Untere Aussparungen in Dosierknopf zum Verhindern von Verklemmungen durch Pulver |
| 61 | | Stachel (Schneidelement) |
| 62 | | Ständer für Stachel |
| 63 | | Trichterelement |
| 64 | | Aussparungen im Dosierknopf zum temporären Verstauen des Pulvers (Kammern) |
| 65 | | Hauptgehäuseteil |
| 66 | | Ausgabeschacht |
| 67 | | Magazinfaltelement (Öffnungselement) |
| 68 | | Positionierungsschienen für Magazin |
| 69 | | Magazin (Vorratspackung) |
| 70 | | Stachel (Schneidelement) |
| 71 | | Ständer für Stachel |
| 72 | | Sperrelement für Dosierknopf |
| 73 | | Dosierknopf |
| 74 | | Positionierungsschienen für Magazin |
| 75 | | klappbares Halterungsteil an Magazin |
| 76 | | Trichterelement |
| 77 | | Abschlussscheibe des Magazins |
| 78 | | Vorratsbereich (Pulverlager) |
| 79 | | Druckfedern für Dosierknopf |
| 80 | | Trichterelement |
| 81 | | Aussparungen im Dosierknopf zum temporären Verstauen des Pulvers (Kammern) |
| 82 | | Ausgabeschacht |
| 83 | | Ansätze des Ausgabeschachtes |
| 84 | | Lauf-&Verschlussfläche |
| 85 | | Dosierknopf |
| 86 | | Dosierknopf (in betätigtem bzw. gedrücktem |
| | | Zustand) |
| 87 | | Ausgabeschacht |
| 88 | | Ansätze des Ausgabeschachtes |
| 89 | | Lauf-&Verschlussfläche |
| 90 | | Aussparungen im Dosierknopf zum temporären Verstauen des Pulvers (Kammern) |
| 91 | | Universeller Dosierer |
| 92 | | Verbindungsschraube |
| 93 | | Hauptgehäuseteil (zweite Komponente) |
| 94 | | Hauptgehäuseteil (erste Komponente) |
| 95 | | Kammer |
| 96 | | Trichterschrägung |
| 97 | | Klemmblöcke |
| 98 | | Halterschächte |
| 99 | | Arretierungselemente |
| 100 | | Ausgabeschacht |
| 101 | | Hauptgehäuseteil b |
| 102 | | Hauptgehäuseteil a |
| 103 | | Nachfüllpack-Hauptteil |
| 104 | | Nachfüllpack-Deckel |
| 105 | | Nachfüllpack-Klemmrand |
| 106 | | Nachfüllpack-Öffnung |
| 107 | | Universeller Dosierer |
| 108 | | Nachfüllpack-Öffnung (Vorratsbereich) |
| 109 | | Nachfüllpack-Klemmrand |
| 110 | | Nachfüllpack-Hauptteil |
| 111 | | Universeller Dosierer |
| 112 | | Nachfüllpack-Hauptteil |
| 113 | | Rasteinkerbungen |
| 114 | | Hauptgehäuseteil (zweite Komponente) |
| 115 | | Verschlusselemente (Sperrelemente) |
| 116 | | Kammerfreigabeauskerbung |
| 117 | | Kammerfreigabeauskerbung |
| 118 | | Rasteinkerbungen |
| 119 | | Verschlusselemente (Sperrelemente) |
| 120 | | Hauptgehäuseteil (zweite Komponente) |
| 121 | | Drehwiderstandverringerer |
| 122 | | Hauptgehäuseteil (erste Komponente) |
| 123 | | Rastelement |
| 124 | | Kammer |
| 125 | | Verbindungselement |
| 126 | | Kammer |
| 127 | | Halterrippen |
| 128 | | Hauptgehäuseteil (erste Komponente) |
| 129 | | Rastelement |
| 130 | | Ausgabeschacht |
| 131 | | Verbindungselement-Verstärkungen |
| 132 | | Arretierungselemente |
| 133 | | Rastelement-Versteifungsrippen |
| 134 | | Rastelement-Greifzähne |
| 135 | | Rastelement-Federelemente |
| 136 | | Wandhalter |
| 137 | | Orientierungselemente |
| 138 | | Verbindungshaken |
| 139 | | Verriegelungselemente |
| 140 | | Verstärkungselemente |
| 141 | | Wandhalter |
| 142 | | Klebestreifen |
| 143 | | Verriegelungselemente |
| 144 | | Universeller Dosierer |
| 145 | | Nachfüllpack |
| 146 | | Rastelement |
| 147 | | Nachfüllpack-Hauptteil |
| 148 | | Wandhalter |
| 149 | | Universeller Dosierer |
| 150 | | Nachfüllpack-Aufnahme |
| 151 | | Verschlussebene (Verschlussplatte) |
| 152 | | Kammer |
| 153 | | Halterrippen |
| 154 | | Arretierungselemente |
| 155 | | Ausgabeschacht |
| 156 | | Rastelement |
| 157 | | Hauptgehäuseteil (erste Komponente) |

## Patentansprüche

1. Manuelle Dosiervorrichtung für ein Vorratsmittel, insbesondere für ein Waschmittel oder Reinigungsmittel, insbesondere in flüssiger Form oder Pulverform, wobei die Dosiervorrichtung umfasst: einen Vorratsbereich in dem sich das Vorratsmittel befindet, einen Ausgabeschacht für das Vorratsmittel und einen Dosiermechanismus, der zwischen dem Vorratsbereich und dem Ausgabeschacht angeordnet ist, und wobei der Dosiermechanismus derart ausgestaltet ist, dass er innerhalb eines Bestätigungszyklus eine festgelegte Menge Vorratsmittel in den Ausgabeschacht entlässt, wobei der Vorratsbereich und der Ausgabeschacht zu keinem Zeitpunkt des Betätigungszyklus in direkter Kommunikation stehen.

2. Manuelle Dosiervorrichtung (2;28) nach Anspruch 1, wobei im Vorratsbereich (78) mindestens eine Schneidelement (15;61;70) und ein Öffnungselement (67;23) vorgesehen sind, die zum Öffnen einer in den Vorratsbereich (78) einzubringenden Vorratspackung (69) kooperieren.

3. Manuelle Dosiervorrichtung (2;28) nach Anspruch 2, wobei das Schneidelement (15, 61;70) im Wesentlichen kreisförmig umlaufend angeordnet ist, wobei der dabei gebildet Kreis von dem Öffnungselement (67;23) unterbrochen ist.

4. Manuelle Dosiervorrichtung (2;28) nach einem der vorstehenden Ansprüche, wobei der Dosiermechanismus zwei parallele Kammern (57;64;81;90) aufweist, die in einer ersten Position mit einem ersten Ende mit dem Vorratsbereich kommunizieren und in einer zweiten Position mit einem zweiten Ende, das dem ersten Ende gegenüberliegt, mit dem Ausgabeschacht kommunizieren, wobei während eines Betätigungszyklus die erste Position, die zweite Position und abschließend wieder die erste Position eingenommen werden.

5. Manuelle Dosiervorrichtung (2) nach Anspruch 4, wobei der Dosiermechanismus ein Rückstellelement (21) aufweist, welches der Betätigung von der ersten zur zweiten Position entgegenwirkt.

6. Manuelle Dosiervorrichtung (2) nach Anspruch 5, wobei das Rückstellelement (21) teilweise in einer der Kammern (57;64;81;90) untergebracht ist.

7. Manuelle Dosiervorrichtung nach Anspruch 1, wobei die Dosiervorrichtung als Aufsatz ausgestaltet ist, der mit einer Vorratspackung koppelbar ist.

8. Manuelle Dosiervorrichtung nach Anspruch 1 oder 7, wobei die Dosiervorrichtung mindestens eine erste Komponente und eine zweite Komponente umfasst, die relativ zueinander um eine Rotationsachse rotierbar sind.

9. Manuelle Dosiervorrichtung nach Anspruch 8, wobei die erste Komponente eine Mehrzahl von gleichförmigen Kammern aufweist, die sich von der Rotationsachse weg und entlang der Rotationsachse erstrecken und gleichmäßig umlaufend um die Rotationsachse angeordnet sind.

10. Manuelle Dosiervorrichtung nach Anspruch 9, wobei die Dosiervorrichtung eine Verschlussebene aufweist, die ausgestaltet ist, um eine erste Auswahl von Kammern gegenüber dem Vorratsbereich zu verschließen, wobei die Verschlussebene Ausnehmungen aufweist, durch welche Vorratsmittel vom Vorratsbereich zu einer zweiten Auswahl von Kammern gelangen kann.

11. Manuelle Dosiervorrichtung nach Anspruch 10, wobei die zweite Komponente Sperrelemente aufweist, die ausgestaltet sind, um eine dritte Auswahl von Kammern gegenüber einem Ausgabeschacht zu verschließen.

12. Manuelle Dosiervorrichtung nach Anspruch 11, wobei zwölf gleichartige Kammern vorgesehen sind, die sich zur Verschlussebene und zur Rotationsachse öffnen.

13. Manuelle Dosiervorrichtung nach Anspruch 12, wobei während eines Betätigungszyklus von der ersten Position zu einer zweiten Position oder von der zweiten Position zu der dritten Position oder von der dritten Position zu der ersten Position gewechselt wird, so dass das eine oder mehrere Sperrelemente so angeordnet werden, dass diese die jeweiligen Kammern je nach Position freigeben oder sperren.

14. Manuelle Dosiervorrichtung nach Anspruch 13, wobei je zwei radial gegenüberliegende Paare von Kammern in der ersten Position mit dem Vorratsbereich kommunizieren und nicht mit einem Ausgabeschacht kommunizieren und in der zweiten Position jeweils eine Kammer eines Paares nicht mit dem Vorratsbereich und nicht mit einem Ausgabeschacht kommuniziert, und wobei in der dritten Position die jeweils eine Kammer eines Paares mit dem Ausgabeschacht, nicht aber mit dem Vorratsbereich kommunizieren.

15. Manuelle Dosiervorrichtung nach Anspruch 14, wobei während eines Betätigungszyklus die erste Komponente gegenüber der zweiten Komponente jeweils um einen festen Drehwinkel, insbesondere um 30°, um die Rotationsachse gedreht wird.
